# EUROPEAN PATENT SPECIFICATION

(11) **EP 4 435 887 B1**
(45) Date of publication and mention of the grant of the patent: **29.04.2026**
(21) Application number: 23208866.6
(22) Date of filing: 09.11.2023
(51) Int. Cl.: H01M 4/134, H01M 4/136, H01M 4/38, H01M 4/58, H01M 4/587, H01M 10/052, H01M 10/0562, H01M 10/0569, H01M 4/62, H01M 4/66, H01M 10/056, H01M 10/0565, H01M 50/383, H01M 10/42, H01M 4/02

(54) **ALL-SOLID SECONDARY BATTERY**
FESTKÖRPERSEKUNDÄRBATTERIE
BATTERIE SECONDAIRE ENTIÈREMENT SOLIDE

(30) Priority: 10.11.2022 KR 20220149349
(43) Date of publication of application: 25.09.2024
(73) Proprietor: Samsung SDI Co., Ltd., Yongin-si, Gyeonggi-do 17084 (KR)
(72) Inventor: Park, Taehyun, Gyeonggi-do 17084 (KR); Son, Inhyuk, Gyeonggi-do 17084 (KR); Jo, Sungnim, Gyeonggi-do 17084 (KR); Shim, Kyueun, Gyeonggi-do 17084 (KR); Lee, Jieun, Gyeonggi-do 17084 (KR)
(74) Representative: Michalski Hüttermann & Partner Patentanwälte mbB

(56) References cited:
- US-A1- 2022 166 058
- WU JINGHUA ET AL: "Lithium/Sulfide All-Solid-State Batteries using Sulfide Electrolytes", vol. 33, no. 6, 18 February 2021 (2021-02-18), DE, pages 2000751, XP093073447, ISSN: 0935-9648, Retrieved from the Internet <URL:https://onlinelibrary.wiley.com/doi/full-xml/10.1002/adma.202000751> DOI: 10.1002/adma.202000751

## Description

### CROSS-REFERENCE TO RELATED APPLICATION

This application claims priority to and the benefit of Korean Patent Application No. 10-2022-0149349, filed on November 10, 2022, in the Korean Intellectual Property Office.

### BACKGROUND

### 1. Field

According to one or more embodiments, the present disclosure relates to an all-solid secondary battery.

### 2. Description of Related Art

Extensive research has recently been conducted on batteries providing relatively high energy density and safety. Lithium batteries are utilized in information devices, communication devices, vehicles, and/or the like. Because vehicles are intimately intertwined and related to people's activities, e.g., on an everyday basis, safety is important.

A liquid electrolyte-containing lithium battery includes a flammable organic solvent. Liquid electrolyte-containing lithium batteries have relatively high risks of overheating and fire in the event of a short circuit.

However, the risks of overheating and fire of a solid electrolyte are lower than that of a comparable liquid electrolyte. Therefore, solid electrolyte-containing lithium batteries may provide improved safety compared to liquid electrolyte-containing lithium batteries. Examples of batteries including a solid electrolyte may be found e.g. US 2022/166058 A1.

### SUMMARY

A sulfur-based material (e.g., S) is utilized as a positive active material to increase capacity of secondary batteries. During a charging and discharging process of a secondary battery, lithium polysulfide is produced from a sulfur-based material, and the produced lithium polysulfide is highly soluble in an electrolytic solution. Therefore, due to a rapid increase in concentration of lithium polysulfide dissolved in an electrolyte during a charging and discharging process of a secondary battery, a content (e.g., amount) of the positive active material decreases, so that capacity of the secondary battery decreases. In some embodiments, the polysulfide dissolved in an electrolytic solution is irreversibly deposited on the surface of a negative electrode via an electrolyte layer to increase resistance of the secondary battery. In some embodiments, side reactions may occur between the polysulfide dissolved in an electrolytic solution and a negative active material, such as lithium metal, on the surface of a negative electrode through an electrolyte layer so that lifespan characteristics of a secondary battery deteriorate. There is a need to develop a secondary battery in which elution of lithium polysulfide from a sulfur-based material is prevented or reduced during a charging and discharging process of the secondary battery.

In a secondary battery including a sulfur-based material (e.g., S) as a positive active material, a volume change of a positive active material is accompanied by a charging and discharging process. The volume change of the positive active material may cause disconnection of an ion transfer path between a positive active material and an ion conductor and/or an electron conductor in a positive electrode and/or cause an increase in internal resistance. With continued repetition of the secondary battery being charged and discharged, disconnection of the ion transfer path cause deterioration of the secondary battery. Thus, there is a need to develop a secondary battery in which disconnection of an ion transfer path is inhibited.

One or more aspects are directed toward a secondary battery having a new (e.g., novel) structure in which elution of lithium polysulfide from a positive active material is inhibited, disconnection of an ion transfer path is inhibited in a positive electrode, and an increase in internal resistance is inhibited during charging and discharging.

Additional aspects will be set forth in part in the description which follows and, in part, will be apparent from the description, or may be learned by practice of the presented embodiments of the disclosure.

According to one or more aspects , an all-solid secondary battery includes:
a positive electrode layer including a positive current collector and a positive active material layer provided on at least one of an upper surface or a lower surface of the positive current collector;
a negative electrode layer; and
a solid electrolyte layer provided between the positive electrode layer and the negative electrode layer,
wherein the positive active material layer includes a lithium-containing sulfide-based positive active material and a composite electrolyte,
wherein the lithium-containing sulfide-based positive active material includes Li₂S, a Li₂S-containing composite, or any combination thereof, and
the composite electrolyte includes a polymer, a lithium salt, and an ionic liquid,
wherein the ionic liquid has a saturated solubility of lithium polysulfide of 5 wt% or less at 25 °C.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic diagram of a positive active material layer including a composite electrolyte, according to some embodiments of the present disclosure.
FIG. 2 is a schematic diagram of a composite electrolyte-free positive active material layer, according to some embodiments of the present disclosure.
FIG. 3 is a cross-sectional view of an all-solid secondary battery according to some embodiments of the present disclosure.
FIG. 4 is a cross-sectional view of an all-solid secondary battery according to some embodiments of the present disclosure.
FIG. 5 is a cross-sectional view of a bi-cell all-solid secondary battery according to some embodiments of the present disclosure.
FIG. 6 is a schematic diagram of a positive electrode layer of an all-solid secondary battery according to some embodiments of the present disclosure.
FIG. 7 is a schematic diagram partially showing the inside of an all-solid secondary battery according to some embodiments of the present disclosure.
FIG. 8 is a cross-sectional view of an all-solid secondary battery according to some embodiments of the present disclosure.
FIG. 9 is a cross-sectional view of an all-solid secondary battery according to some embodiments of the present disclosure.
FIG. 10 is a cross-sectional view of a bi-cell all-solid secondary battery according to some embodiments of the present disclosure.
FIG. 11 is a cross-sectional view of a bi-cell all-solid secondary battery stack according to some embodiments of the present disclosure.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

It will be understood that if (e.g., when) one element is referred to as being "on" another element, it may be directly on the other element, or intervening elements may also be present therebetween. In contrast, if (e.g., when) one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed could be termed a second element, component, region, layer or section without departing from the teachings herein.

The terms utilized herein is for the purpose of describing particular embodiments only and is not intended to be limiting of the present disclosure. As utilized herein, an expression utilized in the singular encompasses the expression "at least one", unless otherwise indicated. The "at least one" should not be construed as singular. As utilized herein, the term "and/or" includes any and all combinations of one or more of the associated listed items. The terms such as "including" and/or "having" are intended to indicate the existence of features, regions, integers, operations, components, and/or elements disclosed in the specification, and are not intended to preclude the possibility that one or more other features, regions, integers, operations, components, and/or elements thereof may exist or may be added.

Spatially relative terms, such as "under", "", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilize or operation, in addition to the orientation depicted in the drawings. For example, if (e.g., when) the device in the drawings is turned over, elements described as "" other elements or features would then be oriented "above" the other elements or features. Thus, the example term "" may encompass both (e.g., simultaneously) an orientation of above and. The device may be otherwise oriented (rotated 90 degrees or at other orientations) and the spatially relative descriptors utilized herein interpreted accordingly.

Unless otherwise defined, all terms (including chemical, technical and scientific terms) utilized herein have the same meaning as commonly understood by one or ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

As utilized herein, it is to be understood that the terms such as "including," "includes," "include," "having," "has," "have," "comprises," "comprise," and/or "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/"utilized herein may be interpreted as "and" or "or" according to the context. The term "combination thereof may include a mixture, a laminate, a complex, a copolymer, an alloy, a blend, a reactant of constituents.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Example embodiments will be described herein with reference to schematic cross-sectional view of ideal embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the actual shape of a region of a device and are not intended to limit the scope of claims.

### Definitions

The term "Group" refers to a group of elements in the periodic table numbered from 1 to 18 classified according to a classification system of The International Union of Pure and Applied Chemistry ("IUPAC").

In the specification, a "particle diameter" of particles indicates an average diameter of spherical particles or an average length of major axes of non-spherical particles. Particle diameters of particles may be measured utilizing a particle size analyzer (PSA). The "particle diameter" of particles is, for example, an average particle diameter. The "average particle diameter" is, for example, a median particle diameter (D50). The average particle diameter (D50) may be measured by a method well suitable to those skilled in the art, for example, by a particle size analyzer, or by a transmission electron microscopic image, a scanning electron microscopic, or field emission scanning electron microscopy (FE-SEM). In some embodiments, a dynamic light-scattering measurement device is utilized to perform a data analysis, and the number of particles is counted for each particle size range, and from this, the average particle diameter (D50) value may be easily obtained through a calculation. In the present disclosure, when particles are spherical, "diameter" indicates a particle diameter or an average particle diameter, and when the particles are non-spherical, the "diameter" indicates a major axis length or an average major axis length.

D50 refers to a particle diameter corresponding to 50 % of the particles in a cumulative distribution curve measured by a laser diffraction method in which particles are accumulated in the order of particle diameter from the smallest particle to the largest particle.

D90 refers to a particle diameter corresponding to 90 % of the particles in a cumulative distribution curve measured by a laser diffraction method in which particles are accumulated in the order of particle diameter from the smallest particle to the largest particle.

D10 refers to a particle diameter corresponding to 10 % of the particles in a cumulative distribution curve measured by a laser diffraction method in which particles are accumulated in the order of particle diameter from the smallest particle to the largest particle.

In the disclosure, the term "metal" includes metals and metalloids such as silicon and germanium in an elemental or ionic state.

In the disclosure, the term "alloy" refers to a mixture of two or more metals.

In the disclosure, the term "electrode active material" refers to a material for electrodes allowing lithiation and delithiation.

In the disclosure, the term "positive active material" refers to a material for positive electrodes allowing lithiation and delithiation.

In the disclosure, the term "negative active material" refers to a material for negative electrodes allowing lithiation and delithiation.

In the disclosure, the terms "lithiation" and "lithiating" refer to a process of adding lithium to an electrode active material.

In the disclosure, the terms "delithiation" and "delithiating" refer to a process of removing lithium from an electrode active material.

In the disclosure, the terms "charging" and "charge" refer to a process of supplying electrochemical energy to a battery.

In the disclosure, the terms "discharging" and "discharge" refer to a process of removing electrochemical energy from a battery.

In the disclosure, the terms "positive electrode" and "cathode" refer to an electrode in which electrochemical reduction and lithiation occur during discharging.

In the disclosure, the terms "negative electrode" and "anode" refer to an electrode in which electrochemical oxidation and delithiation occur during discharging.

As utilized herein, if (e.g., when) a definition is not otherwise provided, "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, and/or combinations thereof.

As utilized herein, if (e.g., when) a definition is not otherwise provided, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments, in specific examples of the present disclosure, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group. In some embodiments, in specific examples of the present disclosure, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments, in specific examples of the present disclosure, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

Expressions such as C1 to C30 refer to that the number of carbon atoms is 1 to 30.

Hereinafter, an all-solid secondary battery according to embodiments will be described in more detail.

### All-solid Secondary Battery

An all-solid secondary battery according to some embodiments includes: a positive electrode layer including a positive current collector and a positive active material layer provided on at least one of an upper surface or a lower surface of the positive current collector (e.g., on one or both selected from among upper and lower surfaces of the positive current collector); a negative electrode layer; and a solid electrolyte layer provided between the positive electrode layer and the negative electrode layer, wherein the positive active material layer includes a lithium-containing sulfide-based positive active material and a composite electrolyte, wherein the lithium-containing sulfide-based positive active material includes Li₂S, a Li₂S-containing composite, or any combination thereof, and the composite electrolyte includes a polymer, a lithium salt, and an ionic liquid, wherein the ionic liquid has a saturated solubility of lithium polysulfide of 5 wt% or less at 25 °C.

The all-solid secondary battery includes a composite electrolyte, and the composite electrolyte includes a polymer, a lithium salt, and an ionic liquid. Because the ionic liquid has a lithium polysulfide solubility of 5 wt% or less, elution and/or migration of lithium polysulfide from the lithium-containing sulfide-based positive active material is inhibited during a charging and discharging process of the all-solid secondary battery. Because the composite electrolyte includes an ionic liquid that hardly (e.g., only sparingly or substantially does not) dissolves the lithium polysulfide, elution and/or migration of lithium polysulfide from the lithium-containing sulfide-based positive active material to the composite electrolyte including the ionic liquid is inhibited during a charging and discharging process of the all-solid secondary battery. By inhibiting the elution and/or migration of lithium polysulfide, a decrease in capacity, an increase in internal resistance, and side reactions caused by the eluted lithium polysulfide are suppressed or reduced in the all-solid secondary battery, so that cycle characteristics and lifespan of the all-solid secondary battery may be improved. In an all-solid secondary battery including an ionic liquid or organic solvent including a high lithium polysulfide solubility, cycle characteristics of the all-solid secondary battery may be deteriorated by increased elution of the lithium polysulfide.

Because the composite electrolyte includes the polymer and the ionic liquid, a volume change of the lithium-containing sulfide-based positive active material may be effectively accepted (e.g., compensated for) during a charging and discharging process. In some embodiments, by including the polymer and the ionic liquid, the composite electrode may be effectively coated on the surfaces of particles of the lithium-containing sulfide-based positive active material or may effectively fill gaps between the particles of the lithium-containing sulfide-based positive active material. Therefore, because the composite electrolyte includes the polymer, the lithium salt, and the ionic liquid, a three-dimensional ion transfer path formed between the particles of the lithium-containing sulfide-based positive active material may be effectively maintained during a charging and discharging process regardless of (e.g., notwithstanding) the volume change of the lithium-containing sulfide-based positive active material. As a result, cycle characteristics of the all-solid secondary battery are improved. In comparison, an inorganic solid electrolyte may accept (e.g., compensate for) the volume change or maintain the ion transfer path relatively less effectively during the charging and discharging process of the lithium-containing sulfide-based positive active material.

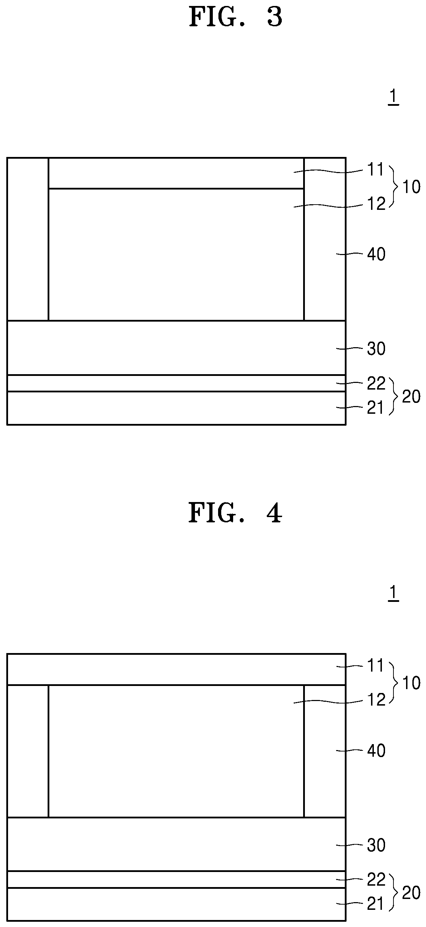

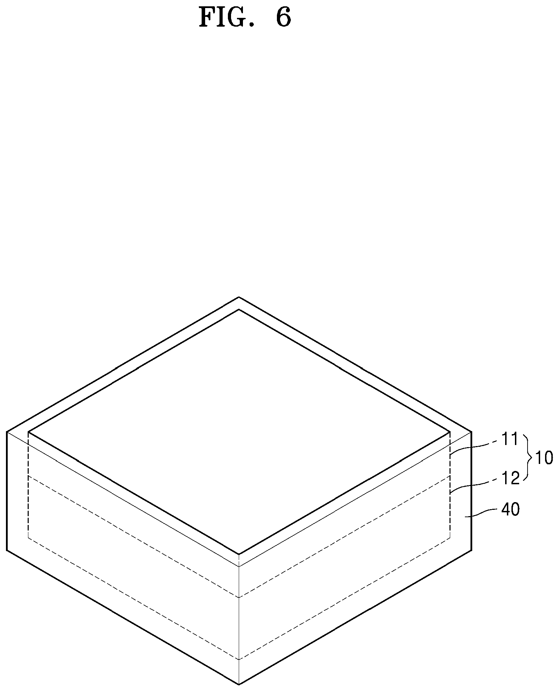

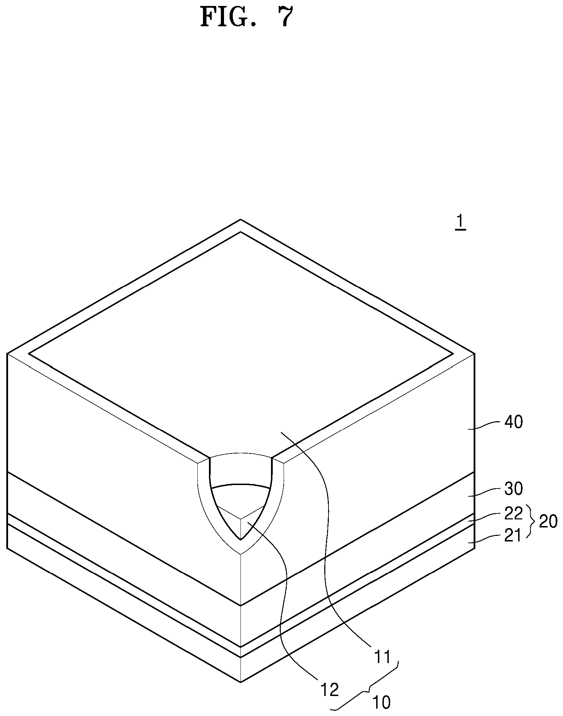

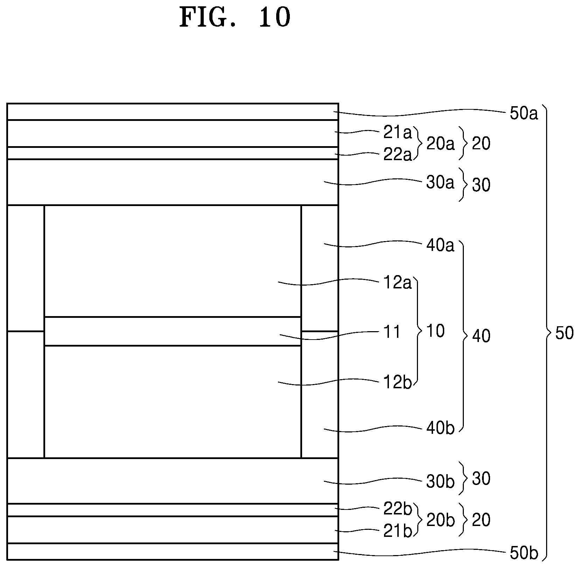

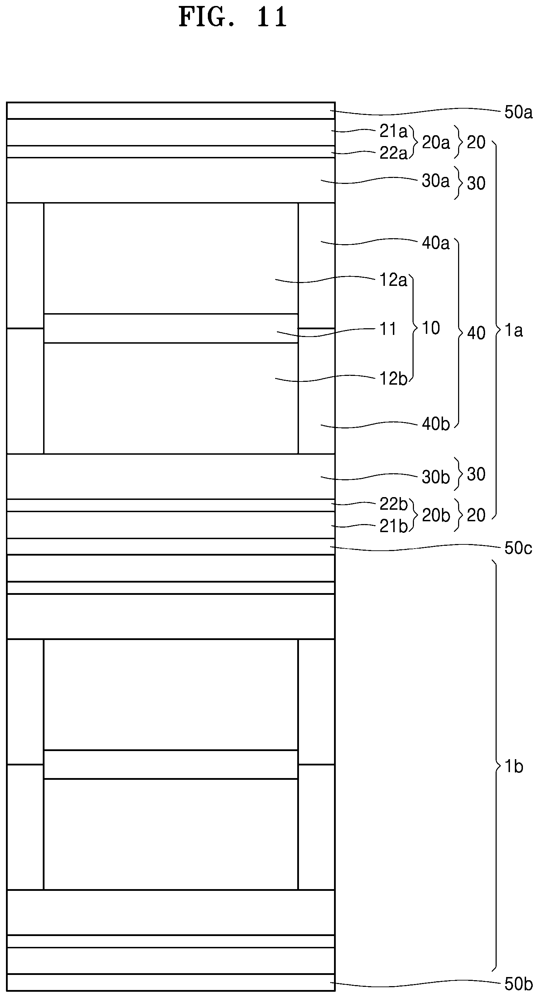

Referring to FIGS. 3 to 11, the all-solid secondary battery 1 includes: a positive electrode layer 10 including a positive current collector 11 and a positive active material layer 12 provided on at least one of an upper surface or a lower surface of the positive current collector (e.g., on one or both selected from among upper and lower surfaces of the positive current collector) 11; a negative electrode layer 20; and a solid electrolyte layer 30 provided between the positive electrode layer 10 and the negative electrode layer 20, wherein the positive active material layer 12 includes a lithium-containing sulfide-based positive active material and a composite electrolyte, wherein the lithium-containing sulfide-based positive active material includes Li₂S, a Li₂S-containing composite, or any combination thereof, and the composite electrolyte includes a polymer, a lithium salt, and an ionic liquid, wherein the ionic liquid has a saturated solubility of lithium polysulfide of 5 wt% or less at 25 °C. The ionic liquid has a saturated solubility of lithium polysulfide of, for example, 3 wt% or less, 1 wt% or less, 0.5 wt% or less, or 0.1 wt% at 25 °C.

### Positive Electrode Layer

### Positive Electrode Layer: Composite Electrolyte

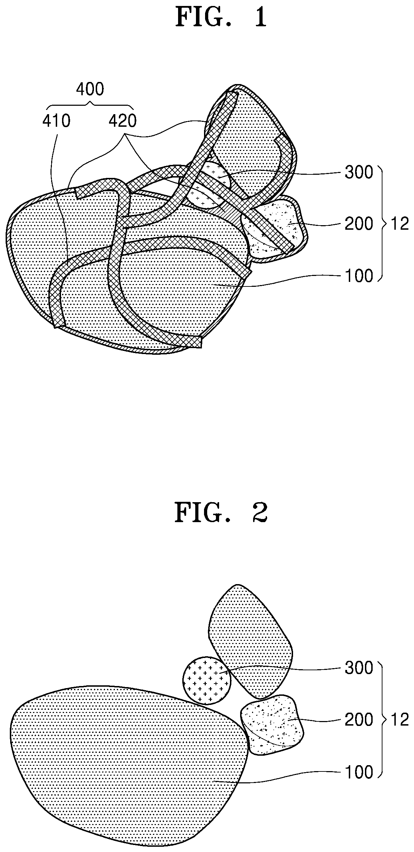

Referring to FIG. 1, the positive active material layer 12 includes a lithium-containing sulfide-based positive active material 100 and a composite electrolyte 400. The composite electrolyte 400 includes a polymer 410, a lithium salt, and an ionic liquid 420. The composite electrolyte 400 includes the polymer 410, the lithium salt, and the ionic liquid 420, and the ionic liquid 420 has a saturated solubility of lithium polysulfide of 5 wt% or less at 25 °C. The ionic liquid 420 may have a saturated solubility of lithium polysulfide of, for example, 3 wt% or less, 1 wt% or less, 0.5 wt% or less, or 0.1 wt% or less at 25 °C.

Because the composite electrolyte 400 includes the polymer 410, the lithium salt, and the ionic liquid 420, and the ionic liquid 420 has a low lithium polysulfide solubility, elution of lithium polysulfide from the lithium-containing sulfide-based positive active material 100 to the composite electrolyte 400 is inhibited during a charging and discharging process. Therefore, because a decrease in capacity and side reactions caused by the elution of lithium polysulfide are inhibited during a charging and discharging process of the all-solid secondary battery 1, cycle characteristics of the all-solid secondary battery 1 may be improved. The saturated solubility of lithium polysulfide of the ionic liquid 420 may be determined by measuring, for example, a concentration of lithium polysulfide dissolved in the ionic liquid 420 including lithium polysulfide precipitates or a concentration of a reduction product thereof by utilizing UV-Vis spectrum. Meanwhile, referring to FIG. 2, a positive active material layer 12 of the related arts includes a lithium-containing sulfide-based positive active material 100, a conductive material 200 and a solid electrolyte 300 and does not include a composite electrolyte 400. Since the positive active material layer 12 of the related arts does include the composite electrolyte 400, a three-dimensional ion transfer path formed between the particles of the lithium-containing sulfide-based positive active material 100 may not be effectively maintained during a charging and discharging process regardless of (e.g., notwithstanding) the volume change of the lithium-containing sulfide-based positive active material 100. As a result, an internal resistance of a positive active material layer 12 of the related arts increases and thus the cycle characteristics of the all-solid secondary battery 1 are deteriorated.

Referring to FIG. 1 and 3 to 11, the composite electrolyte may further include lithium polysulfide. The composite electrolyte may further include lithium polysulfide eluted from the lithium-containing sulfide-based positive active material during a charging and discharging process of the all-solid secondary battery. An amount of lithium polysulfide included in the composite electrolyte may be 5 wt% or less, 4 wt% or less, 3 wt% or less, 2 wt% or less, or 1 wt% or less based on a total weight of the composite electrolyte. For example, the amount of lithium polysulfide may be 5 parts by weight, 4 parts by weight, 3 parts by weight, 2 parts by weight or 1 parts by weight or more based on 100 parts by weight of the composite electrolyte including lithium polysulfide. Because the composite electrolyte has a low amount of lithium polysulfide, a decrease in capacity and side reactions caused by lithium polysulfide are inhibited during a charging and discharging process of the all-solid secondary battery, so that cycle characteristics of the all-solid secondary battery may be improved.

The composite electrolyte includes the ionic liquid and the ionic liquid may be represented by Formula 1 or 2.

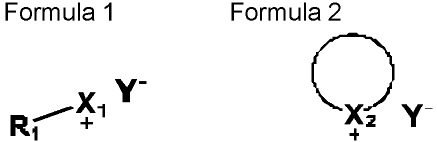

In Formula 1, X₁ is -N(R₂)(R₃)(R₄) or -P(R₂)(R₃)(R₄), and
R₁, R₂, R₃ and R₄ may each independently be an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkylene oxide group.

In Formula 2, 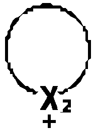 is a heterocycloalkyl ring or heteroaryl ring including 1 to 3 hetero atoms and 2 to 30 carbon atoms, the ring is unsubstituted or substituted with a substituent, and X₂ is -N(R₅)(R₆), -N(R₅)=, -P(R₅)(R₆) or -P(R₅)=,
wherein the substituent for the ring, R₅, and R₆ may each independently be hydrogen, an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkylene oxide group, and Y⁻ is an anion.

The ionic liquid may be, for example, represented by Formula 3 or 4.

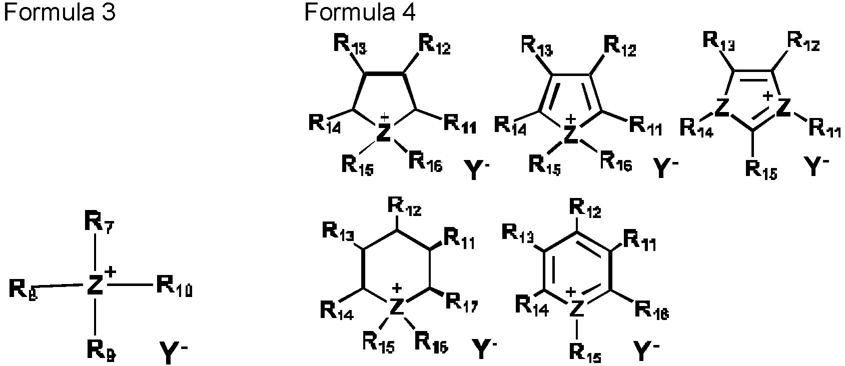

In Formula 3, Z is N or P, and
R₇, R₈, R₉ and R₁₀ may each independently be an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group.

In Formula 4, Z is N or P,
R₁₁, R₁₂, R₁₃, R₁₄, R₁₅, R₁₆, and R₁₇ may each independently be hydrogen, an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and Y⁻ is an anion.

Examples of the ionic liquid may be represented by Formulae 5 to 10.

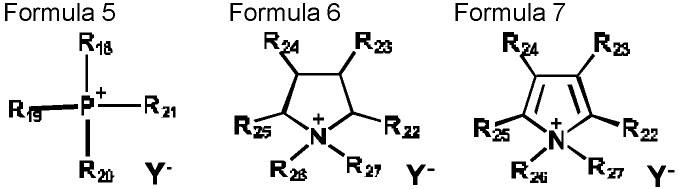

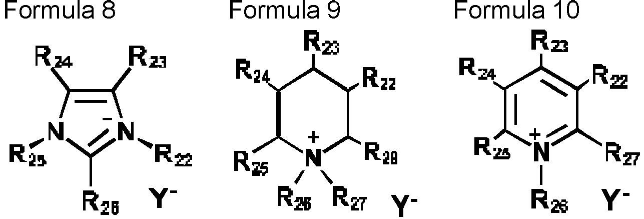

In Formulae 5 to 10, R₁₈, R₁₉, R₂₀ and R₂₁ may each independently be an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group,
R₂₂, R₂₃, R₂₄, R₂₅, R₂₆, and R₂₇ may each independently be hydrogen, an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and Y⁻ is an anion.

The ionic liquid includes an anion, and the anion may include, for example, BF₄⁻, PF₆⁻, AsF₆⁻, SbF₆⁻, AlCl₄, HSO₄⁻, ClO₄⁻, CH₃SO₃⁻, CF₃CO₂⁻, Cl⁻, Br⁻, I⁻, BF₄⁻, SO₄⁻, PF₆⁻, ClO₄⁻, BOB⁻(bis(oxalate)borate), CF₃SO₃⁻, CF₃CO₂⁻, (FSO₂)₂N⁻, (C₂F₅SO₂)₂N⁻, (C₂F₅SO₂)(CF₃SO₂)N⁻, (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, C₂N₃⁻, (O(CF₃)₂C₂(CF₃)₃O)₂PO⁻, (FSO₂)₂N⁻, (CF₃SO₂)₂N⁻, or any combination thereof. An anion of the ionic liquid represented by Formulae 1 to 10 may also be selected from the described anions.

The ionic liquid may include, for example, 1-methyl-1-propylpyrrolidinium bis(fluorosulfonyl)imide, 1-methyl-1-butylpyrrolidinium bis(fluorosulfonyl)imide, 1-methyl-1-propylpyrrolidinium bis(trifluoromethanesulfonyl)imide, 1-methyl-1-butylpyrrolidinium bis(trifluoromethanesulfonyl)imide, or any combination thereof.

The ionic liquid may have a molecular weight of, for example, 1000 Daltons (Da) or less, 900 Da or less, 800 Da, or 500 Da or less. Because the ionic liquid has a molecular weight within the ranges described above, cycle characteristics of the all-solid secondary battery may further be improved.

The ionic liquid may have a dielectric constant of, for example, 15 or less, 14 or less, 13 or less, 12 or less, 11 or less, or 10 or less. As the dielectric constant of the ionic liquid decreases, reactivity with the inorganic solid electrolyte is reduced. Therefore, side reactions between the ionic liquid and the inorganic solid electrolyte layer decreases in the positive active material layer including the composite electrolyte, and thus deterioration of the all-solid secondary battery may be inhibited more effectively. The dielectric constant of the ionic liquid is a permittivity of the ionic liquid with relative to a permittivity in a vacuum.

An amount of the ionic liquid is, for example, at most about (e.g., less than) 10 wt%, 5 wt% or less, 3 wt% or less, or 2 wt% or less, based on a total weight of the positive active material layer. The amount of the ionic liquid may be, for example, from 0.1 wt% and less than 10 wt%, from 0.5 wt% to 5 wt%, from 1 wt% to 3 wt%, or from 1 wt% to 2 wt% based on the total weight of the positive active material layer. With a too low amount of the ionic liquid, it is difficult to obtain the effects of the ionic liquid. The amount of the ionic liquid may be, for example, from 0.1 parts by weight to 10 parts by weight, from 0.5 parts by weight to 5 parts by weight, from 1 parts by weight to 3 parts by weight, or from 1 parts by weight to 2 parts by weight based on 100 parts by weight of the positive active material layer. In the case of utilizing an excessive amount of the ionic liquid, energy density of the all-solid secondary battery may decrease.

The amount of the ionic liquid may be, for example, from 1 wt% to 40 wt%, from 5 wt% to 30 wt%, from 10 wt% to 30 wt%, or from 10 wt% to 20 wt% based on the total weight of the composite electrolyte. The amount of the ionic liquid may be, for example, from 1 part by weight to 40 parts by weight, from 5 parts by weight to 30 parts by weight, from 10 parts by weight to 30 parts by weight, or from 10 parts by weight to 20 parts by weight based on 100 parts by weight of the composite electrolyte. Because the amount of the ionic liquid included in the composite electrolyte is within the ranges described above, cycle characteristics of the all-solid secondary battery may further be improved.

The composite electrolyte includes a polymer. The polymer may bind together particles of the lithium-containing sulfide-based positive active material included in the positive active material layer. The polymer is, for example, an ion-conductive polymer, an electron-conductivity polymer, or any combination thereof. The polymer may be, for example, a crosslinked polymer, a non-crosslinked polymer, or any combination thereof. The polymer may serve as a binder while constituting the composite electrolyte. The polymer may include, for example, polyethylene, polypropylene, styrene butadiene rubber (SBR), polyacrylonitrile (PAN), polymethyl methacrylate (PMMA), polyimide (PI), polytetrafluoroethylene (PTFE), polyvinylidene fluoride (PVDF), polyvinylidene fluoride-hexafluoropropylene (PVDF-HFP), polyvinylpyrrolidone (PVP), polyethylene oxide (PEO), tetrafluoroethylene-perfluoroalkyl vinyl ether copolymer, vinylidene fluoride-chlorotrifluoroethylene copolymer, ethylene-tetrafluoroethylene copolymer, polychlorotrifluoroethylene, vinylidene fluoride-pentafluoropropylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethylvinyl ether-tetrafluoroethylene copolymer, ethylene-acrylic acid copolymer, or any combination thereof.

The composite electrolyte includes a lithium salt. By including the lithium salt, the composite electrolyte may have ionic conductivity. The lithium salt may include, for example, at least one selected from among LiPF₆, LiBF₄, LiCF₃SO₃, LiC₂F₅SO₃, LiC₄F₉SO₃, LiN(SO₂F)₂ (LiFSI), LiN(CF₃SO₂)₂ (LiTFSI), LiN(SO₂CF₂CF₃)₂, LiSCN, LiN(CN)₂, Li(CF₃SO₂)₃C, LiCl, LiF, LiBr, Lil, LiB(C₂O₄)₂, LiBF₄, LiBF₃(C₂F₅), LiAsF₆, LiSbF₆, LiClO₄, and compounds represented by Formulae 11 to 14:

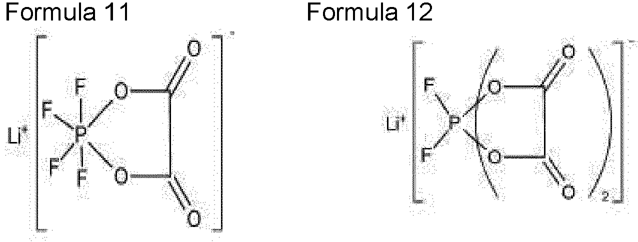

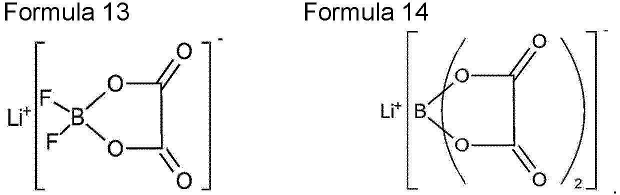

The composite electrolyte may not include a (e.g., may exclude any) solvent, monomer, or oligomer including an alkylene oxide repeating unit. For example, the composite may not include a (e.g., may exclude any) monomer or oligomer including an ethylene oxide repeating unit. The monomer or oligomer including the alkylene oxide repeating unit may be easily decomposed at a high voltage during charging and discharging of the all-solid secondary battery. For example, the composite electrolyte may not include a (e.g., may exclude any) compound such as glyme and/or diglyme.

An amount of the composite electrolyte may be, for example, 10 wt% or less, 7 wt% or less, or 5 wt% or less based on the total weight of the positive active material layer. The amount of the composite electrolyte may be, for example, from 1 wt% to 10 wt%, from 1 wt% to 7 wt%, from 1 wt% to 5 wt%, or from 2 wt% to 5 wt% based on the total weight of the positive active material layer. In the case of utilizing a too low amount of the composite electrolyte, the effects of the composite electrolyte may be negligible. In the case of utilizing a too high amount of the composite electrolyte, energy density of the all-solid secondary battery may decrease.

The amount of the composite electrolyte may be, for example, from 0.1 parts by weight to 5 parts by weight, from 0.1 parts by weight to 3 parts by weight or from 0.1 parts by weight to 1 parts by weight based on 100 parts by weight of the lithium-containing positive active material.

The amount of a combination of the polymer and the lithium salt may be 9 wt% or less, 7 wt% or less, 5 wt% or less, or 3 wt% or less based on the total weight of the positive active material layer. The amount of the combination of the polymer and the lithium salt may be, for example, from 1 wt% to 9 wt%, from 1 wt% to 7 wt%, from 1 wt% to 5 wt%, or from 1 wt% to 3 wt% based on the total weight of the positive active material layer. In the case of utilizing a too low amount of the combination of the polymer and the lithium salt, the effects of the composite electrolyte may be negligible. In the case utilizing a too high amount of the combination of the polymer and the lithium salt, energy density of the all-solid secondary battery may decrease.

The molar ratio of the polymer to the lithium salt may be, for example, from 2:1 to 30:1, from 5:1 to 30:1, from 8:1 to 20:1, from 10:1 to 20:1, from 12:1 to 20:1, or from 12:1 to 16:1. Because the molar ratio of the polymer to the lithium salt is within the ranges described above, cycle characteristics of the all-solid secondary battery including the composite electrolyte may further be improved.

### Positive Electrode Layer: Solid Electrolyte

The positive active material layer 12 may further include, for example, a solid electrolyte. The solid electrolyte may be, for example, an inorganic solid electrolyte. The solid electrolyte may be, for example, a sulfide-based solid electrolyte.

The sulfide-based solid electrolyte may include, for example, at least one selected from among Li₂S-P₂S₅, Li₂S-P₂S₅-LiX, where X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, where m and n are positive numbers, and Z is Ge, Zn, or Ga, Li₂S-GeS₂, Li₂S-SiS₂-Li₃PO₄, Li₂S-SiS₂-LiₚMO_{q}, where p and q are positive numbers and M is P, Si, Ge, B, Al, Ga, or In, Li₇₋ₓPS₆₋ₓClₓ, where 0≤x≤2, Li₇₋ₓPS₆₋ₓBrₓ, where 0≤x≤2, and Li₇₋ₓPS₆₋ₓIₓ, where 0≤x≤2. The sulfide-based solid electrolyte may be prepared by treating a starting material such as Li₂S and P₂S₅ by melt quenching or mechanical milling. In some embodiments, heat treatment may be performed after such treatment. The solid electrolyte may be in an amorphous state, a crystalline state, or a mixed state thereof. In some embodiments, the solid electrolyte may include, for example, sulfur (S), phosphorus (P), and lithium (Li) as components among materials of the described sulfide-based solid electrolytes. For example, the solid electrolyte may be a material including Li₂S-P₂S₅. In the case where the material including Li₂S-P₂S₅ is utilized as the sulfide-based solid electrolyte material constituting the solid electrolyte, a mixing molar ratio of Li₂S to P₂S₅ may be, for example, from 20:80 to 90:10, from 25:75 to 90:10, from 30:70 to 70:30, or from 40:60 to 60:40.

The sulfide-based solid electrolyte may include, for example, an argyrodite type or kind solid electrolyte represented by Formula 15:

Formula 15 Li⁺₁₂₋ₙ₋ₓAⁿ⁺X²⁻₆₋ₓY⁻ₓ

In Formula 15, A is P, As, Ge, Ga, Sb, Si, Sn, Al, In, Ti, V, Nb, or Ta, X is S, Se, or Te, and Y is Cl, Br, I, F, CN, OCN, SCN, or N₃, where 1≤n≤5 and 0≤x≤2. The sulfide-based solid electrolyte may be an argyrodite-type or kind compound (e.g., an argyrodite compound) including, for example, at least one selected from among Li₇₋ₓPS₆₋ₓClₓ, where 0≤x≤2, Li₇₋ₓPS₆₋ₓBrₓ, where 0≤x≤2, and Li₇₋ₓPS₆₋ₓIₓ, where 0≤x≤2. The sulfide-based solid electrolyte may be an argyrodite-type or kind compound including, for example, at least one selected from among Li₆PS₅Cl, Li₆PS₅Br, and Li₆PS₅I.

The argyrodite-type or kind solid electrolyte may have a density of 1.5 g/cc to 2.0 g/cc. In the case of utilizing the argyrodite-type or kind solid electrolyte having a density of 1.5 g/cc or more, internal resistance of the all-solid secondary battery may be reduced and a short circuit caused by penetration of the solid electrolyte layer by lithium metal may be effectively inhibited.

The solid electrolyte included in the positive active material layer 12 may have a smaller average particle diameter D50 than that of a solid electrolyte included in the solid electrolyte layer 30. For example, the average particle diameter D50 of the solid electrolyte included in the positive active material layer 12 may be 90% or less, 80% or less, 70% or less, 60% or less, 50% or less, 40% or less, 30% or less, or 20% or less of the average particle diameter D50 of the solid electrolyte included in the solid electrolyte layer 30. The average particle diameter D50 is, for example, a median particle diameter (D50). The median particle diameter D50 is a particle diameter corresponding to a 50% cumulative volume calculated from the smallest particle in a particle size distribution measured, for example, by laser diffraction method.

An amount of the solid electrolyte included in the positive active material layer 12 may be, for example, from 1 wt% to 40 wt%, from 5 wt% to 35 wt%, or from 10 wt% to 30 wt% based on the total weight of the positive active material layer 12.

### Positive Electrode Layer: Conductive Material

The positive active material layer 12 may further include a conductive material. The conductive material may be, for example, a carbonaceous conductive material, a metallic conductive material, or any combination thereof. The carbonaceous conductive material may be, for example, graphite, carbon black, acetylene black, Ketjen black, carbon fiber, or any combination thereof, but is not limited thereto, and any carbonaceous conductive materials commonly available in the art may also be utilized. The metallic conductive material may be metal powder, metal fibers, or any combination thereof, but is not limited thereto, and any metallic conductive materials commonly available in the art may also be utilized. An amount of the conductive material included in the positive active material layer 12 may be, for example, from 1 wt% to 40 wt%, from 5 wt% to 35 wt%, or from 10 wt% to 30 wt% based on the total weight of the positive active material layer 12.

### Positive Electrode Layer: Positive Active Material

The positive active material layer 12 includes a lithium-containing sulfide-based positive active material.

The lithium-containing sulfide-based positive active material is, for example, an electrode material prepared by adding lithium to a sulfur-based positive active material. The sulfur-based positive active material may include, for example, a sulfur-based material, a sulfur-based material-containing composite, or any combination thereof. The sulfur-based material may be, for example, inorganic sulfur, Li₂Sₙ (where n>1), a disulfide compound, an organic sulfur compound, a carbon-sulfur polymer, or any combination thereof. The sulfur-based material-containing composite may be inorganic sulfur, Li₂Sₙ (where n>1), a disulfide compound, an organic sulfur compound, a carbon-sulfur polymer, or any combination thereof. The sulfur-based material-containing composite may include, for example, a composite of a sulfur-based material and carbon, a composite of a sulfur-based material, carbon, and a solid electrolyte, a composite of a sulfur-based material and a solid electrolyte, a composite of a sulfur-based material and a metal carbide, a composite of a sulfur-based material, carbon, and a metal carbide, a composite of a sulfur-based material and a metal nitride, a composite of a sulfur-based material, carbon, and a metal nitride, or any combination thereof. Because the lithium-containing sulfide-based positive active material provides a higher discharge capacity per unit weight than an oxide-based positive active material, the all-solid secondary battery including the lithium-containing sulfide-based positive active material may have an increased energy density per unit weight.

The lithium-containing sulfide-based positive active material includes, for example, Li₂S, a Li₂S-containing composite, or any combination thereof. In the case where Li₂S, the Li₂S-containing composite, or any combination thereof having high capacity is utilized as the lithium-containing sulfide-based positive active material, utilize of lithium metal may not be provided during manufacturing of the all-solid secondary battery. Because lithium metal has high reactivity and high ductility, mass productivity may decrease during manufacturing of a battery. Therefore, mass productivity of the all-solid secondary battery may be increased. Because lithium metal is omitted from the negative electrode layer, a volume of the negative electrode layer is reduced, so that energy density per unit volume of the all-solid secondary battery is increased and the all-solid secondary battery may have a simpler structure.

A volume of the lithium-containing sulfide-based positive active material (e.g., Li₂S), decreases by delithiation during initial charging and increases by lithiation during subsequent discharging. Therefore, the volume of the lithium-containing sulfide-based positive active material varies in a state where an ion and/or electron transfer path, (e.g., which is formed by the conductive material and/or the like and located around the lithium-containing sulfide-based positive active material), is maintained (e.g., populated) with conductive material, and thus there is a low possibility of disconnection in the ion and/or electron transfer path. In contrast, for example, a volume of a sulfur-based positive active material (e.g., S) increases by lithiation during initial discharging and decreases by delithiation during subsequent charging. Therefore, the initial ion and/or electron transfer path, (e.g., which is formed by the conductive material and/or the like and located around the sulfur-based positive active material), may be interrupted by an initial volume increase of the sulfur-based positive active material, and thus there is a high possibility of disconnection in the ion and/or electron transfer path.

The lithium-containing sulfide-based positive active material may have a particle diameter of, for example, 1 nanometer (nm) to 50 micrometer (µm), 10 nm to 50 µm, 50 nm to 40 µm, 100 nm to 30 µm, 500 nm to 30 µm, or 1 µm to 20 µm. Because the lithium-containing sulfide-based positive active material has a particle diameter within the ranges described above, cycle characteristics of the all-solid secondary battery including a lithium sulfide-based positive active material may further be improved. The Li₂S-containing composite is, for example, a composite of Li₂S and a conductive material. The conductive material is, for example, an ion-conductive material, an electron-conductive material, or any combination thereof.

The electron-conductive material may have an electronic conductivity of, for example, 1.0×10³ siemen per meter (S/m), 1.0×10⁴ S/m, or 1.0×10⁵ S/m or more. The electron-conductive material may have, for example, a particulate electron-conductive material, a plate-like electron-conductive material, a rod-like electron-conductive material, or any combination thereof, but is not limited thereto. The electron-conductive material may be, for example, carbon, metal powder, or a metal compound. In the case where carbon is utilized as the electron-conductive material, an all-solid secondary battery having a high energy density per unit mass may be implemented due to high electronic conductivity and light weight of carbon. The electron-conductive material may have pores. Because the electron-conductive material has pores, Li₂S may be located in the pores, and thus a contact area between Li₂S and the electron-conductive material may be enlarged and a specific surface area of Li₂S may be enlarged. A pore capacity is, for example, from 0.1 cc/g to 20.0 cc/g, from 0.5 cc/g to 10 cc/g, or from 0.5 cc/g to 5 cc/g. An average pore diameter is, for example, from 1 nm to 100 nm, from 1 nm to 50 nm, or from 1 nm to 20 nm. A Brunauer-Emmett-Teller (BET) specific surface area of the electron-conductive material having pores may be from 200 square meter per gram (m²/g) to 4500 m²/g in the case where an average pore diameter is 15 nm or less and from 100 m²/g to 2500 m²/g in the case where the average pore diameter exceeds 15 nm. The BET specific surface area, pore diameter, pore capacity, and average pore diameter may be obtained by, for example, a nitrogen adsorption method.

The ion-conductive material may have an ionic conductivity of, for example, 1.0×10⁻⁵ S/m, 1.0×10⁻⁴ S/m, or 1.0×10⁻³ S/m or more. The ion-conductive material may have pores. Because the ion-conductive material has pores, Li₂S may be located in the pores, and thus a contact area between Li₂S and the ion-conductive material may be enlarged and a specific surface area of Li₂S may be enlarged. The ion-conductive material may have the form of, for example, a particulate ion-conductive material, a plate-like ion-conductive material, a rod-like ion-conductive material, or any combination thereof, but is not limited thereto. The ion-conductive material may be, for example, a sulfide-based solid electrolyte and/or an oxide-based solid electrolyte. In the case where the sulfide-based solid electrolyte is utilized as the ion-conductive material, an all-solid secondary battery having a large capacity may be implemented due to high ionic conductivity of the sulfide-based solid electrolyte and high formability into one or more suitable shapes.

The Li₂S-containing composite includes, for example, a composite of Li₂S and carbon, a composite of Li₂S, carbon, and a solid electrolyte, a composite of Li₂S and a solid electrolyte, a composite of Li₂S and a metal carbide, a composite of Li₂S, carbon, and a metal carbide, a composite of Li₂S and a metal nitride, a composite of Li₂S, carbon, and a metal nitride, or any combination thereof.

The composite of Li₂S and carbon includes carbon. The carbon is, for example, any material including carbon atoms and commonly available as conductive materials in the art may also be utilized. The carbon may be, for example, crystalline carbon, amorphous carbon, or any combination thereof. The carbon may be, for example, a calcined product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or any combination thereof. The carbon nanostructure may be, for example, carbon nanotube, carbon nanofiber, carbon nanobelt, carbon nanorod, graphene, or any combination thereof. The carbon may be, for example, porous carbon or non-porous carbon. The porous carbon may include, for example, periodic and regular two-dimensional or three-dimensional pores. The porous carbon may be, for example, carbon black such as Ketjen black, acetylene black, Denka black, thermal black, and/or channel black; graphite, activated carbon, or any combination thereof. The carbon may be, for example, in a particle form, a sheet form, or a flake form, but is not limited thereto, any material commonly available in the art as carbon may also be utilized. A method of manufacturing the composite of Li₂S and carbon may be a dry method, a wet method, any combination thereof, but is not limited thereto, and any methods commonly available in the art to manufacture the composite of Li₂S and carbon, such as milling, heat treatment, and deposition may be utilized without being limited thereto.

The composite of Li₂S, carbon, and a solid electrolyte includes carbon and a solid electrolyte. The carbon is as described above in the composite of Li₂S and carbon. The solid electrolyte may be any solid electrolytes commonly available in the art as an ion-conductive material may also be utilized. The solid electrolyte may be, for example, an inorganic solid electrolyte. The solid electrolyte is, for example, a crystalline solid electrolyte, an amorphous solid electrolyte, or any combination thereof. The solid electrolyte is, for example, a sulfide-based solid electrolyte, an oxide-based solid electrolyte, a lithium salt compound, or any combination thereof. The sulfide-based solid electrolyte may include, for example, Li, S and P, and may further include a halogen element. The sulfide-based solid electrolyte may be selected from sulfide-based solid electrolytes utilized in the solid electrolyte layer. The sulfide-based solid electrolyte may have an ionic conductivity of, for example, 1×10⁻⁵ siemen per centimeter (S/cm) or more at room temperature. The oxide-based solid electrolyte includes, for example, Li, O, and a transition metal element, and may further include another element. The oxide-based solid electrolyte may be, for example, a solid electrolyte having an ionic conductivity of 1×10⁻⁵ S/cm or more at room temperature. The oxide-based solid electrolyte may be selected from oxide-based solid electrolytes utilized in the solid electrolyte layer. The solid electrolyte includes, for example, a lithium salt compound, and the lithium salt compound is, for example, an inorganic compound. The solid electrolyte includes, for example, a lithium salt compound, and the lithium salt compound does not include a sulfur (S) atom. The solid electrolyte includes, for example, a lithium salt compound, and the lithium salt compound may be, for example, a two-component compound including lithium and an element selected from Groups 13 to 17 of the periodic table. The two-component compound may include, for example, at least one selected from among LiF, LiCl, LiBr, Lil, LiH, Li₂S, Li₂O, Li₂Se, Li₂Te, Li₃N, Li₃P, Li₃As, Li₃Sb, Li₃Al₂, and LiB₃. The lithium salt compound utilized as the solid electrolyte may be, for example, a three-component compound including lithium and two elements selected from Groups 13 to 17 of the periodic table. The three-component compound includes, for example, at least one selected from among Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is, for example, at least one lithium halide compound selected from among LiF, LiCl, LiBr, and Lil.

The composite of Li₂S and a solid electrolyte includes a solid electrolyte. For descriptions of the solid electrolyte, refer to the described composite of Li₂S, carbon, and the solid electrolyte.

The composite of Li₂S and a metal carbide includes a metal carbide. The metal carbide is, for example, a two-dimensional metal carbide. The two-dimensional metal carbide is represented by, for example, Mₙ₊₁CₙTₓ (where M is a transition metal, T is a terminal group, T is O, OH, and/or F, n=1, 2, or 3, and x is a number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5,} Cr_{0.5})₃C₂Tₓ, Ti₃CNTₓ, Ta₄C₃Tₓ, Nb₄C₃Tₓ, or any combination thereof. The surface of the two-dimensional metal carbide is terminated with O, OH, and/or F.

The composite of Li₂S, carbon, and a metal carbide includes carbon and a metal carbide. For descriptions of carbon, refer to the described composite of Li₂S and carbon. For descriptions of the metal carbide, refer to the described composite of Li₂S and a metal carbide.

The composite of Li₂S and a metal nitride includes a metal nitride. The metal nitride is, for example, a two-dimensional metal nitride. The two-dimensional metal nitride may be represented by, for example, Mₙ₊₁NₙTₓ (where M is a transition metal, T is a terminal group, T is O, OH, and/or F, n=1, 2, or 3, and x is a number of terminal groups). The surface of the two-dimensional metal nitride is terminated with O, OH, and/or F.

The composite of Li₂S, carbon, and a metal nitride includes carbon and a metal nitride. For descriptions of carbon, refer to the described composite of Li₂S and carbon. For descriptions of the metal carbide, refer to the described composite of Li₂S and a metal nitride.

An amount of the sulfide-based positive active material included in the positive active material layer 12 may be, for example, from 5 wt% to 95 wt%, from 10 wt% to 90 wt%, from 15 wt% to 90 wt%, from 20 wt% to 90 wt%, or from 30 wt% to 80 wt% based on the total weight of the positive active material layer 12.

The positive active material layer 12 may further include, for example, a sulfide-based compound distinguished from Li₂S. The sulfide-based compound may be, for example, a compound including a metal element other than Li and sulfur. The sulfide-based compound is, for example, a compound including a metal element belonging to Groups 1 to 14 of the periodic table and having an atomic weight of 10 or more and sulfur. The sulfide-based compound may be, for example, FeS₂, VS₂, NaS, MnS, FeS, NiS, CuS, or any combination thereof. Because the positive active material layer further includes a sulfide-based compound, cycle characteristics of the all-solid secondary battery may further be improved. An amount of the sulfide-based compound included in the positive active material layer 12 and distinguished from Li₂S may be 10 wt% or less, 5 wt% or less, 3 wt% or less, or 1 wt% or less based on the total weight of the positive active material layer 12.

### Positive Electrode Layer: Other Additives

The positive active material layer 12 may further include, for example, additives such as a filler, a coating agent, a dispersant, and an ion-conductive adjuvant in addition to the described lithium-containing sulfide-based positive active material, composite electrolyte, solid electrolyte, binder, and conductive material.

The filler, the coating agent, the dispersant, and the ion-conductive adjuvant included in the positive active material layer 12 may be any suitable materials commonly utilized in electrodes of all-solid secondary batteries.

### Positive Electrode Layer: Positive Current Collector

The positive current collector 11 may be, for example, in the form of a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector 11 may not be provided. The positive current collector 11 may have a thickness of, for example, 1 µm to 100 µm, 1 µm to 50 µm, 5 µm to 25 µm, or 10 µm to 20 µm.

The positive current collector (e.g., positive electrode current collector) may include, for example, a base film and a metal layer provided on at least one side (e.g., on both (e.g., opposite) sides) of the base film. The base film may include, for example, a polymer. The polymer may be, for example, a thermoplastic polymer. The polymer may be, for example, polyethylene terephthalate (PET), polyethylene (PE), polypropylene (PP), polybutylene terephthalate (PBT), polyimide (PI), or any combination thereof. The polymer may be an insulator. Because the base film includes an insulating thermoplastic polymer, the base film is softened or liquefied to block or reduce the operation of a battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the positive current collector (e.g., positive electrode current collector) decrease, so that stability of the lithium battery may be improved in the case of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab.

In some embodiments, a metal chip may further be added between the metal layer and the lead tab for stronger welding between the metal layer and the lead tab. The metal chip may be a chip of the same material as the metal of the metal layer. The metal chip may be, for example, metal foil and metal mesh. Examples of the metal chip may be, aluminum foil, copper foil, and stainless steel (SUS) foil (e.g., austenitic stainless steel). By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer.

In some embodiments, the base film may have a thickness of, for example, 1 µm to 50 µm, 1.5 µm to 50 µm, 1.5 µm to 40 µm, or 1 to 30 µm. With the thickness of the base film within the described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the described ranges, the base film melts during a process of welding the lead tab to be easily bound to the lead tab.

To improve adhesion between the base film and the metal layer, surface treatment such as corona treatment may be performed on the base film.

The thickness of the metal layer may be, for example, from 0.01 µm to 3 µm, from 0.1 µm to 3 µm, from 0.1 µm to 2 µm, or from 0.1 µm to 1 µm. With the thickness of the metal layer within the described ranges, stability of the electrode assembly may be obtained while maintaining conductivity thereof. The thickness of the metal chip may be, for example, from 2 µm to 10 µm, from 2 µm to 7 µm, or from 4 µm to 6 µm. With the thickness of the metal chip within the described ranges, the metal layer may be more easily connected to the lead tab. Because the positive current collector (e.g., positive electrode current collector) has the described structure, the weight of the positive electrode may be reduced, so that energy density of the positive electrode and the lithium battery may be increased.

### Positive Electrode Layer: First Inactive Member

Referring to FIGS. 3 to 11, the positive electrode layer 10 includes a positive current collector 11, and a positive active material layer 12 provided at least one of an upper surface or a lower surface of the positive current collector 11. A first inactive member 40 is provided on one side surface of the positive electrode layer 10. The first inactive member 40 is provided on one side surface of the positive active material layer 12 and the positive current collector 11. Referring to FIG. 4, the first inactive member 40 is provided on one side surface of the positive active material layer 12 and between the solid electrolyte layer 30 and the positive electrode substrate 11 facing the solid electrolyte layer 30. The first inactive member 40 is not provided on the side surfaces of the positive current collector 11.

By including the first inactive member 40, occurrence of cracks is inhibited in the solid electrolyte layer 30 during manufacturing and/or charging and discharging of the all-solid secondary battery 1, so that cycle characteristics of the all-solid secondary battery 1 may be improved. In an all-solid secondary battery 1 not including the first inactive member 40, a non-substantially uniform pressure is applied to the solid electrolyte layer 30 in contact with the positive electrode layer 10 to cause occurrence of cracks in the solid electrolyte layer 30 during manufacturing and/or charging and discharging of the all-solid secondary battery 1, and lithium metal grows thereby to increase the possibility of a short circuit.

In the all-solid secondary battery 1, a thickness T2 of the first inactive member 40 may be greater than a thickness T1 of the positive active material layer 12 or the same as the thickness T1 of the positive active material layer 12. In the all-solid secondary battery 1, the thickness T2 of the first inactive member 40 is substantially the same as a thickness T3 of the positive electrode layer 10. Because the thickness T2 of the first inactive member 40 is the same as the thickness T3 of the positive electrode layer 10, a substantially uniform pressure is applied between the positive electrode layer 10 and the solid electrolyte layer 30, and the positive electrode layer 10 is in close contact with the solid electrolyte layer 30, so that interfacial resistance between the positive electrode layer 10 and the solid electrolyte layer 30 is reduced. In some embodiments, the solid electrolyte layer 30 is sufficiently sintered during a pressing/manufacturing process of the all-solid secondary battery 1, and thus internal resistance of the solid electrolyte layer 30 and the all-solid secondary battery 1 including the same may be reduced.

The first inactive member 40 is on (e.g., in contact with) the solid electrolyte layer 30 and the side surfaces (e.g., in a state of being around (e.g., surrounding) the side surfaces) of the positive electrode layer 10. Because the first inactive member 40 is on (e.g., in contact with) the solid electrolyte layer 30 and the side surfaces (e.g., in a state of being around (e.g., surrounding) the side surfaces of the positive electrode layer 10, cracks, which are caused by a pressure difference in the solid electrolyte layer 30 not on (e.g., in contact with) the positive electrode layer 20 during a pressing process, may be effectively inhibited. The first inactive member 40 being on or around (e.g., surrounding) the side surfaces of the positive electrode layer 10 is separated from the negative electrode layer 20, more specifically, from the first negative active material layer 22. The first inactive member 40 is on (e.g., in contact with) the solid electrolyte layer 30 and the side surfaces (e.g., in a state of being around (e.g., surrounding) the side surfaces) of the positive electrode layer 10 and is separated from the negative electrode layer 20. Therefore, the possibility of a short circuit caused by physical contact between the positive electrode layer 10 and the first negative active material layer 22 or the possibility of a short circuit caused by overcharging of lithium may be inhibited. For example, in the case where the first inactive member 40 is provided on one side surface of the positive current collector 11 as well as one side surface of the positive active material layer 12, the possibility of a short circuit caused by contact between the positive current collector 11 and the negative electrode layer 20 is inhibited more effectively.

Referring to FIGS. 3 to 11, the first inactive member 40, 40a, or 40b extends from one side surface of the positive electrode layer 10 to an end portion of the solid electrolyte layer 30. By extending the first inactive member 40 to the end portion of the solid electrolyte layer 30, cracks occurring in the end portion of the solid electrolyte layer 30 may be inhibited. The end portion of the solid electrolyte layer 30 is the outermost portion in contact with a side surface of the solid electrolyte layer 30. The first inactive member 40 extends to the outermost portion in contact with the side surface of the solid electrolyte layer 30. The first inactive member 40 is separated from the negative electrode layer 20, more specifically, the first negative active material layer 22. The first inactive member 40 extends to the end portion of the solid electrolyte layer 30 but not in contact with the negative electrode layer 20. The first inactive member 40 fills a space between one side surface of the positive electrode layer 10 and the end portion of the solid electrolyte layer 30.

Referring to FIGS. 3 and 4, a width W2 of the first inactive member 40 extending from one side surface of the positive electrode layer 10 to the end portion of the solid electrolyte layer 30 is, for example, 1 % to 30 %, 1 % to 25 %, 1 % to 20 %, 1 % to 15 %, 1 % to 10 % or 1 % to 5 % of a width W1 the positive electrode layer 10 between one side surface and the other side surface facing the one side surface. In the case where the width W2 of the first inactive member 40 is too large, energy density of the all-solid secondary battery 1 decreases. In the case where the width W2 of the first inactive member 40 is too small, the effects of the first inactive member 40 are negligible.

An area S1 of the positive electrode layer 10 is smaller than an area S3 of the solid electrolyte layer 30 in contact with the positive electrode layer 10. The first inactive member 40 arranged to surround side surfaces of the positive electrode layer 10 compensates for a difference in area between the positive electrode layer 10 and the solid electrolyte layer 30. Because an area S2 of the first inactive member 40 compensates of the difference between the area S1 of the positive electrode layer 10 and the area S3 of the solid electrolyte layer 30, cracks caused by a pressure difference during a pressing process may be effectively inhibited in the solid electrolyte layer 30. For example, a sum of the area S1 of the positive electrode layer 10 and the area S2 of the first inactive member 40 is identical to the area S3 of the solid electrolyte layer 30.

The area S1 of the positive electrode layer 10 is less than 100 %, 99 % or less, 98 % or less, 97 % or less, 96 % or less, or 95 % or less of the area S3 of the solid electrolyte layer 30. The area S1 of the positive electrode layer 10 is, for example, from 50 % to less than 100 %, from 50 % to 99 %, from 55 % to 98 %, from 60 % to 97 %, from 70 % to 96 %, from 80 % to 95 %, or from 85 % to 95% of the area S3 of the solid electrolyte layer 30.

In the case where the area S1 of the positive electrode layer 10 is identical to or greater than the area S3 of the solid electrolyte layer 30, the possibility of a short circuit due to physical contact between the positive electrode layer 10 and the first negative electrode active material layer 22 or a short circuit due to overcharging of lithium increases. The area S1 of the positive electrode layer 10 is, for example, identical to the area of the positive active material layer 12. The area S1 of the positive electrode layer 10 is, for example, identical to the area of the positive current collector 11.

The area S2 of the first inactive member 40 is, for example, 50 % or less, 40 % or less, 30 % or less, 20 % or less, or 10 % or less of the area S1 of the positive electrode layer 10. The area S2 of the first inactive member 40 is, for example, from 1 % to 50 %, from 5 % to 40 %, from 5 % to 30 %, from 5 % to 20 %, or from 5 % to 15 % of the area S1 of the positive electrode layer 10.

The area S1 of the positive electrode layer 10 is smaller than an area S4 of the negative current collector 21. The area S1 of the positive electrode layer 10 is, for example, less than 100 %, 99 % or less, 98 % or less, 97 % or less, 96 % or less, or 95 % or less of the area S4 of the negative current collector 21. The area S1 of the positive electrode layer 10 is, for example, from 50 % to less than 100 %, from 50 % to 99 %, from 55 % to 98 %, from 60 % to 97 %, from 70 % to 96 %, from 80 % to 95 %, or from 85 % to 95 % of the area S4 of the negative current collector 21. The area S4 of the negative current collector 21 is, for example, identical to the area of the negative electrode layer 20. The area S4 of the negative current collector 21 is, for example, identical to the area of the first negative active material layer 22.

As utilized herein, the "same" area, length, width, thickness, and/or shape include all cases having "substantially same" area, length, width, thickness, and/or shape except that the area, length, thickness, and/or shape are intentionally modified. The "same" area, length, width, and/or thickness includes, for example, a range of unintended differences less than 1 %, less than 0.5 %, or less than 0.1 % in the area, length, width, and/or thickness between targets of comparison.

A thickness of the first inactive member 40 is, for example, greater than a thickness of the first negative active material layer 22. The thickness of the first negative active material layer 22 is, for example, 50 % or less, 40 % or less, 30 % or less, 20 % or less, or 10 % or less of a thickness of the first inactive member 40. The thickness of the first negative active material layer 22 may be from 1 % to 50 %, from 1 % to 40 %, from 1 % to 30 %, from 1 % to 20 %, or from 1 % to 10 % of the thickness of the first inactive member 40.

The negative electrode layer 20 includes a negative current collector 21 and a first negative active material layer 22 provided on a first surface of the negative current collector 21. For example, the first negative active material layer 22 is not formed on (e.g., excluded from) a second surface of the negative current collector 21 opposite to the first surface of the negative current collector 21. For example, the first negative active material layer 22 is provided only on the first surface of the negative current collector 21 and is not provided on (e.g., excluded from) the second surface of the negative current collector 21.

The first inactive member 40 may be a gasket. By utilizing the gasket as the first inactive member 40, cracks caused in the solid electrolyte layer 30 by a pressure difference during a pressing process may be more effectively inhibited.

The first inactive member 40 may have, for example, a single-layer structure. In some embodiments, although not shown in the drawings, the first inactive member 40 may have a multilayer structure. In the first inactive member 40 having a multilayer structure, each layer may have a different composition. The first inactive member 40 having a multilayer structure such as a two-layer structure, a three-layer structure, a four-layer structure, or a five-layer structure. The first inactive member 40 having a multilayer structure may include, for example, at least one adhesive layer and at least one support layer. The adhesive layer effectively prevents separation of the positive electrode layer 10 from the solid electrolyte layer 30 caused by a volume change of the positive electrode layer 10 during a charging and discharging process of the all-solid secondary battery 1 and provides binding strength between the support layer and other layers, so that strength of a film of the first inactive member 40 is increased. The support layer provides a supporting force to the first inactive member 40 to prevent or reduce non-substantially uniform application of a pressure to the solid electrolyte layer 30 during a pressing process or a charging and discharging process and prevent or reduce deformation of the all-solid secondary battery 1.

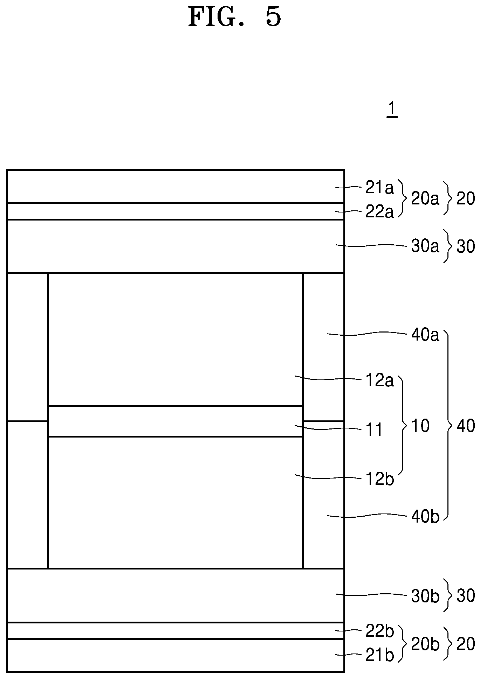

Referring to FIG. 5, the all-solid secondary battery 1 includes a positive electrode layer 10, a negative electrode layer 20, and a solid electrolyte layer 30 provided therebetween. The positive electrode layer 10 includes a positive current collector 11 and a first positive active material layer 12a and a second positive active material layer 12b respectively provided on upper and lower surfaces of the positive current collector 11, the solid electrolyte layer 30 includes a first solid electrolyte layer 30a in contact with the first positive active material layer 12a and a second solid electrolyte layer 30b in contact with the second positive active material layer 12b, the negative electrode layer 20 includes a first negative electrode layer 20a in contact with the first solid electrolyte layer 30a and a second negative electrode layer 20b in contact with the second solid electrolyte layer 30b, and a first inactive member 40 is located to surround side surfaces of the positive electrode layer 10 between the first solid electrolyte layer 30a and the second solid electrolyte layer 30b facing each other. The first inactive member 40 includes, for example, a first-(a) inactive member 40a in contact with the first solid electrolyte layer 30a and a first-(b) inactive member 40b in contact with the second solid electrolyte layer 30b. Therefore, the all-solid secondary battery 1 has a bi-cell structure. Because the all-solid secondary battery 1 has such a bi-cell structure, the solid electrolyte layers 30 and the negative electrode layers 20 are symmetrically arranged to face each other about the positive electrode layer 10, structural deformation caused by a pressure applied during manufacturing of the all-solid secondary battery 1 may be more effectively inhibited. Therefore, cracks are inhibited in the solid electrolyte layer 30 during a manufacturing process and/or a charging and discharging process of the all-solid secondary battery 1 and a short circuit of the all-solid secondary battery 1 is prevented or reduced, and thus cycle characteristics of the all-solid secondary battery 1 are further improved. In some embodiments, by utilizing one positive current collector 11 for a plurality of positive active material layers 12a and 12b, energy density of the all-solid secondary battery 1 is increased.

Referring to FIGS. 3 to 11, the first inactive member 40 is, for example, a flame-retardant inactive member. Because the flame-retardant inactive member provides flame retardancy, thermal runaway and ignition of the all-solid secondary battery 1 may be prevented or reduced. As a result, safety of the all-solid secondary battery 1 may further be improved. Because the flame-retardant inactive member is hydroscopic it may absorb moisture remaining in the all-solid secondary battery 1, deterioration of the all-solid secondary battery 1 is prevented or reduced so that lifespan characteristics of the all-solid secondary battery 1 are improved.

The flame-retardant inactive member includes, for example, a matrix and a filler. The matrix includes, for example, a substrate and a reinforcement. The matrix includes, for example, a fibrous substrate and a fibrous reinforcement. By including the substrate, the matrix may have elasticity. Therefore, the matrix effectively accepts a volume change during charging and discharging of the all-solid secondary battery 1 and may be arranged in one or more suitable positions. The substrate included in the matrix includes, for example, a first fibrous material. Because the substrate includes the first fibrous material, a volume change of the positive electrode layer 10 is effectively accepted during charging and discharging of the all-solid secondary battery 1, and deformation of the first inactive member 40 caused by the volume change of the positive electrode layer 10 may be inhibited. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Because the first fibrous material is an insulating material, a short circuit between the positive electrode layer 10 and the negative electrode layer 20 caused by lithium dendrite and/or the like formed during a charging and discharging process of the all-solid secondary battery 1 may be effectively inhibited. The first fibrous material includes, for example, at least one selected from among pulp fibers, insulating polymer fibers, and ion-conductive polymer fibers. Because the matrix includes the reinforcement, strength of the matrix is increased. Therefore, the matrix may prevent or reduce an excessive volume change during charging and discharging of the all-solid secondary battery 1 and prevent or reduce deformation of the all-solid secondary battery. The reinforcement included in the matrix includes, for example, a second fibrous material. Because the reinforcement includes the second fibrous material, strength of the matrix may be increased more uniformly. The second fibrous material is, for example, a material having an aspect ratio or 3 or more, 5 or more, or 10 or more. The first fibrous material is, for example, a material having an aspect ratio of 3 to 100, 5 to 100, or 10 to 100. The second fibrous material is, for example, a flame-retardant material. Because the second fibrous material is the flame-retardant material, ignition caused by thermal runaway due to an external impact may be effectively prevented or reduced during a charging and discharging process of the all-solid secondary battery 1. The second fibrous material is, for example, glass fibers, metal oxide fibers, and ceramic fibers.

The flame-retardant inactive member includes a filler in addition to the matrix. The filler may be located inside the matrix, on the surface of the matrix, or both (e.g., simultaneously) inside and on the surface of the matrix. The filler is, for example, an inorganic material. The filler included in the flame-retardant inactive member is, for example, hydroscopic (e.g., a moisture getter). The filler absorbs moisture, for example, at a temperature less than about 100°C to remove moisture remaining in the all-solid secondary battery 1, thereby preventing or reducing deterioration of the all-solid secondary battery 1. In some embodiments, in the case where a temperature of the all-solid secondary battery 1 exceeds 150 °C during a charging and discharging process of the all-solid secondary battery 1 or due to thermal runaway caused by an external impact, the filler releases the absorbed moisture, thereby effectively inhibiting ignition of the all-solid secondary battery 1. For example, the filler may be a flame retardant. The filler is, for example, a metal hydroxide having moisture absorbency. The metal hydroxide included in the filler is, for example, Mg(OH)₂, Fe(OH)₃, Sb(OH)₃, Sn(OH)₄, Tl(OH)₃, Zr(OH)₄, Al(OH)₃, or any combination thereof. An amount of the filler included in the flame-retardant inactive member is, for example, from 10 parts by weight to 80 parts by weight, from 20 parts by weight to 80 parts by weight, from 30 parts by weight to 80 parts by weight, from 40 parts by weight to 80 parts by weight, from 50 parts by weight to 80 parts by weight, from 60 parts by weight to 80 parts by weight, or from 65 parts by weight to 80 parts by weight based on 100 parts by weight of the flame-retardant inactive member 40.

The flame-retardant inactive member may further include, for example, a binder. The binder may include, for example, a curable polymer or a non-curable polymer. The curable polymer is a polymer cured by heat and/or pressure. The curable polymer is, for example, a solid at room temperature. The flame-retardant inactive member 40 includes, for example, a thermo-pressure curable film and/or a cured product thereof. The thermo-pressure curable polymer is, for example, TSA-66 manufactured by Toray.

The flame-retardant inactive member may further include another material in addition to the described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and/or polyethylene (PE).

A density of the substrate or the reinforcement included in the flame-retardant inactive member may be, for example, 10 % to 300 %, 10 % to 150 %, 10 % to 140 %, 10 % to 130 %, or 10 % to 120 % of the density of the positive active material included in the positive active material layer 12.

The first inactive member 40 is a member not including an electrochemically active material, such as an electrode active material. The electrode active material a material that allows intercalation/deintercalation of lithium. The first inactive member 40 is formed of any material commonly utilized in the art, other than the electrode active material.

### Negative Electrode Layer

### Negative Electrode Layer: Negative Active Material

Referring to FIGS. 3 to 11, the negative electrode layer 20 includes: a negative current collector 21; and a first negative active material layer 22 provided on the negative current collector 21. The first negative active material layer 22 includes, for example, a negative active material.

The negative active material included in the first negative active material layer 22 includes, for example, at least one selected from a carbonaceous negative active material and a metal-based negative active material. The metal-based negative active material is capable of forming an alloy or compound with lithium..

The carbonaceous negative active material is, for example, amorphous carbon. The amorphous carbon may be, for example, carbon black (CB), acetylene black (AB), furnace black (FB), Ketjen black (KB), or graphene, but is not limited thereto, and any carbon classified as amorphous carbon in the art may also be utilized. The amorphous carbon refers to carbon that does not have crystallinity or has very low crystallinity and is distinguished from crystalline carbon or graphite-based carbon.

The metal-based negative active material that is capable of forming an alloy or compound with lithium includes at least one alloying selected from among gold (Au), platinum (Pt), palladium (Pd), silicon (Si), silver (Ag), aluminum (Al), bismuth (Bi), tin (Sn), and zinc (Zn), but is not limited thereto, and any suitable negative active materials commonly available in the art that is capable of forming an alloy or compound with lithium) may also be utilized. For example, because nickel (Ni) does not form an alloy with lithium, Ni is not the negative active material that is a lithium-containing alloy or compound (e.g., forming an alloy or compound with lithium).

The first negative active material layer 22 includes one type or kind of the negative active materials or a mixture of a plurality of different negative active materials among these negative active materials. For example, the first negative active material layer 22 includes only amorphous carbon or includes at least one metal selected from among gold (Au), platinum (Pt), palladium (Pd), silicon (Si), silver (Ag), aluminum (Al), bismuth (Bi), tin (Sn), and zinc (Zn). In some embodiments, the first negative active material layer 22 includes a mixture of amorphous carbon and at least one metal selected from among gold (Au), platinum (Pt), palladium (Pd), silicon (Si), silver (Ag), aluminum (Al), bismuth (Bi), tin (Sn), and zinc (Zn). A mixing ratio of amorphous carbon and a metal such as gold in the mixture is a weight ratio, for example, from 10:1 to 1:2, from 5:1 to 1:1, or from 4:1 to 2:1. However, the mixing ratio is not limited thereto but selected in accordance with required characteristics of the all-solid secondary battery 1. Due to the negative active material having such a composition, cycle characteristics of the all-solid secondary battery 1 may further be improved.

The negative active material included in the first negative active material layer 22 may be, for example, in the form of particles. The negative active material in the form of particles may have a particle diameter of, for example, 4 µm or less, 3 µm or less, 2 µm or less, 1 µm or less, or 500 nm or less. The negative active material in the form of particles may have a particle diameter of, for example, 10 nm to 4 µm, 10 nm to 3 µm, 10 nm to 2 µm, 10 nm to 1 µm, or 10 nm to 500 nm. Due to the particle diameter of the negative active material within the ranges described above, reversible absorbing and/or desorbing of lithium may occur more easily during charging and discharging. The particle diameter of the negative active material is, for example, a median diameter D50 measured utilizing a laser particle size analyzer.

The negative active material included in the first negative active material layer 22 includes, for example, a mixture of first particles formed of amorphous carbon and second particles formed of a metal. The metal includes, for example, gold (Au), platinum (Pt), palladium (Pd), silicon (Si), silver (Ag), aluminum (Al), bismuth (Bi), tin (Sn), and zinc (Zn). An amount of the second particles is from 8 to 60 wt%, from 10 to 50 wt%, from 15 to 40 wt%, or from 20 to 30 wt% based on a total weight of the mixture. Due to the amount of the second particles is within the ranges above, cycle characteristics of the all-solid secondary battery 1 are further improved.

### Negative Electrode Layer: Binder

The first negative active material layer 22 may further include a binder. The binder included in the first negative active material layer 22 may be, for example, styrene butadiene rubber (SBR), polytetrafluoroethylene, polyvinylidene fluoride, polyethylene, vinylidene fluoride/hexafluoropropylene copolymer, polyacrylonitrile, or polymethylmethacrylate, but is not limited thereto, and any binders commonly available in the art may also be utilized. The binders may be utilized alone or in combination of a plurality of different binders.

Because the first negative active material layer 22 includes the binder, the first negative active material layer 22 is stabilized on the negative current collector 21. In some embodiments, cracks may be inhibited in the first negative active material layer 22 during a charging and discharging process, although a volume and/or a relative position of the first negative active material layer 22 changes. For example, in the case where the first negative active material layer 22 does not include a binder, the first negative active material layer 22 is easily separated from the negative current collector 21. Because the first negative active material layer 22 is separated from the negative current collector 21, an exposed region of the negative current collector 21 is brought into contact with the solid electrolyte layer 30, thereby increasing the possibility of occurrence of a short circuit. The first negative active material layer 22 is prepared by, for example, applying a slurry in which a material constituting the first negative active material layer 22 is dispersed to the negative current collector 21, and drying the slurry. By adding the binder to the first negative active material layer 22, the negative active material may be stably dispersed in the slurry. For example, in the case where the slurry is applied to the negative current collector 21 by screen printing, it is possible to suppress or reduce clogging of a screen (e.g., clogging by agglomerates of the negative active material).

### Negative Electrode Layer: Other Additives

The first negative active material layer 22 may further include additives conventionally utilized in the all-solid secondary battery 1, such as a filler, a coating agent, a dispersant, and an ion-conductive adjuvant.

### Negative Electrode Layer: First Negative Active Material Layer

A thickness of the first negative active material layer 22 is, for example, 50 % or less, 40 % or less, 30 % or less, 20 % or less, 10 % or less, or 5 % or less of a thickness of the positive active material layer 12. A thickness of the first negative active material layer 22 is, for example, from 1 µm to 20 µm, from 2 µm to 10 µm, or from 3 µm to 7 µm. In the case where the first negative active material layer 22 has a too small thickness, lithium dendrite formed between the first negative active material layer 22 and the negative current collector 21 breaks the first negative active material layer 22, making it difficult to improve cycle characteristics of the all-solid secondary battery 1. In the case where the first negative active material layer 22 has a too large thickness, energy density of the all-solid secondary battery 1 decreases, internal resistance of the all-solid secondary battery 1 is increased by the first negative active material layer 22, making it difficult to improve cycle characteristics of the all-solid secondary battery 1.

As the thickness of the first negative active material layer 22 decreases, a charging capacity of the first negative active material layer 22 also decreases. The charging capacity of the first negative active material layer 22 is, for example, 50 % or less, 40 % or less, 30 % or less, 20 % or less, 10 % or less, 5 % or less, or 2 % or less of a charging capacity of the positive active material layer 12. The charging capacity of the first negative active material layer 22 is, for example, from 0.1 % to 50 %, from 0.1 % to 40 %, from 0.1 % to 30 %, from 0.1 % to 20 %, from 0.1 % to 10 %, from 0.1 % to 5 %, or from 0.1 % to 2 % based on the charging capacity of the positive active material layer 12. In the case where the first negative active material layer 22 has a too low charging capacity, the thickness of the first negative active material layer 22 becomes too small, and thus lithium dendrite formed between the first negative active material layer 22 and the negative current collector 21 during repeated charging and discharging processes breaks the first negative active material layer 22, making it difficult to improve cycle characteristics of the all-solid secondary battery 1. In the case where the first negative active material layer 22 has a too high charging capacity, energy density of the all-solid secondary battery 1 decreases, and thus internal resistance of the all-solid secondary battery 1 is increased by the first negative active material layer 22, making it difficult to improve cycle characteristics of the all-solid secondary battery 1. A ratio (C1/C2) of the charging capacity C1 of the first negative active material layer 22 to the charging capacity C2 of the positive active material layer 12 is, for example, from 0.001 to 0.45, from 0.001 to 0.4, from 0.001 to 0.3, from 0.001 to 0.3, from 0.001 to 0.2, from 0.001 to 0.1, from 0.001 to 0.05, or from 0.001 to 0.02.

The charging capacity of the positive active material layer 12 is obtained by multiplying a charging capacity density (milliampere-hour per gram (mAh/g)) of the positive active material by a mass of the positive active material of the positive active material layer 12. In the case of utilizing one or more suitable types (kinds) of positive active materials, charging capacity density × mass values for all of the positive active materials are calculated respectively, and a sum of the values is regarded as the charging capacity of the positive active material layer 12. The charging capacity of the first negative active material layer 22 is calculated in substantially the same manner. For example, the charging capacity of the first negative active material layer 22 is obtained by multiplying a charging capacity density (mAh/g) of the negative active material by a mass of the negative active material of the first negative active material layer 22. In the case of utilizing one or more suitable types (kinds) of negative active materials, charging capacity density × mass values for all of the negative active materials are calculated respectively, and a sum of the values is regarded as the charging capacity of the first negative active material layer 22. In this case, the charging capacity densities of the positive active material and the negative active material are capacities estimated utilizing all-solid half-cells to which lithium metal is applied as a counter electrode. The charging capacities of the positive active material layer 12 and the first negative active material layer 22 are directly measured utilizing the all-solid half-cells. The charging capacity density is calculated by dividing the measured charging capacity by the mass of each active material. In some embodiments, a charging capacity of the positive active material layer 12 and the first negative active material layer 22 may be initial charging capacity measured during charging of a first cycle.

### Negative Electrode Layer: Second Negative Active Material Layer

In some embodiments, the all-solid secondary battery 1 further includes, for example, a second negative active material layer provided between the negative current collector 21 and the first negative active material layer 22 after charging. The second negative active material layer is a metal layer including lithium or a lithium alloy. The metal layer includes lithium or a lithium alloy. Therefore, the second negative active material layer, as a metal layer including lithium, serves as a reservoir of lithium. The lithium alloy is, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloy commonly available in the art may also be utilized. The second negative active material layer may include, or be formed of, one of the alloys alone, lithium, or a combination of one or more suitable types (kinds) of alloys. The second negative active material layer is, for example, a plated layer. For example, the second negative active material layer is plated between the first negative active material layer 22 and the negative current collector 21 during a charging and discharging process of the all-solid secondary battery 1.

A thickness of the second negative active material layer is not limited, but may be, for example, from 1 µm to 500 µm, from 1 µm to 200 µm, from 1 µm to 150 µm, from 1 µm to 100 µm, or from 1 µm to 50 µm. In the case where the thickness of the second negative active material layer is too small, the function of the second negative active material layer as a reservoir of lithium is difficult to obtain. In the case where the thickness of the second negative active material layer is too large, the mass and volume of the all-solid secondary battery 1 increase, and thus cycle characteristics of the all-solid secondary battery 1 may deteriorate.

In some embodiments, in the all-solid secondary battery 1, the second negative active material layer may be provided between the negative current collector 21 and the first negative active material layer 22 before assembling the all-solid secondary battery 1. In the case where a second negative active material layer is provided between the negative current collector 21 and the first negative active material layer 22 before assembling the all-solid secondary battery 1, the second negative active material layer, as a metal layer including lithium, serves as a reservoir of lithium. For example, before assembling the all-solid secondary battery 1, a lithium foil may be provided between the negative current collector 21 and the first negative active material layer 22.

In the case where the second negative active material layer is plated during charging after assembling the all-solid secondary battery 1, energy density of the all-solid secondary battery 1 increases because the second negative active material layer is not included while the all-solid secondary battery 1 is assembled. While the all-solid secondary battery 1 is charged, charging is performed to exceed the charging capacity of the first negative active material layer 22. For example, the first negative active material layer 22 is overcharged. During initial charging, lithium is absorbed to the first negative active material layer 22. The negative active material included in the first negative active material layer 22 forms an alloy or compound with lithium ions that have migrated from the positive electrode layer 10. In the case where the first negative active material layer 22 is overcharged to exceed the capacity thereof, lithium is plated on a rear surface of the first negative active material layer 22, i.e., between the negative current collector 21 and the first negative active material layer 22, and a metal layer corresponding to the second negative active material layer is formed by the plated lithium. The second negative active material layer is a metal layer mainly composed of lithium (i.e., lithium metal). These results are obtained because the negative active material included in the first negative active material layer 22 includes a material forming an alloy or compound with lithium. During discharging, lithium of the first negative active material layer 22 and the second negative active material layer, i.e., the metal layer, is ionized to migrate in a direction toward the positive electrode layer 10. Therefore, it is possible to utilize lithium as a negative active material in the all-solid secondary battery 1. In some embodiments, because the second negative active material layer is coated with the first negative active material layer 22, the first negative active material layer 22 serves as a protective layer for the second negative active material layer, i.e., the metal layer, to prevent or reduce precipitation and growth of lithium dendrite. Therefore, a short circuit and capacity reduction are inhibited in the all-solid secondary battery 1, and thus cycle characteristics of the all-solid secondary battery 1 are improved. In some embodiments, in the case where the second negative active material layer is provided by charging after assembling the all-solid secondary battery 1, a region of the negative electrode layer 20, i.e., a region between the negative current collector 21 and the first negative active material layer 22, is a Li-free region not including lithium (Li) in the early state of charging or after completely discharging the all-solid secondary battery 1.

### Negative Electrode Layer: Negative Current Collector

The negative current collector 21 may be formed of, for example, a material that does not react with, i.e., a material that does not form an (e.g., any) alloy and compound with lithium. Examples of the material constituting the negative current collector 21 may include, copper (Cu), stainless steel (SUS), titanium (Ti), iron (Fe), cobalt (Co), and nickel (Ni), but are not limited thereto, and any materials commonly available in the art as electrode current collectors may also be utilized. The negative current collector 21 may be formed of one metal selected from those described above or an alloy or coated material of two or more metals. The negative current collector 21 may be, for example, in the form of a plate or foil.

In some embodiments, the all-solid secondary battery 1 may further include a thin film including an element forming an alloy with lithium on a surface of the negative current collector 21. The thin film is provided between the negative current collector 21 and the first negative active material layer 22. The thin film includes, for example, an element capable of forming an alloy with lithium. Examples of the element capable of forming an alloy with lithium include gold, silver, zinc, tin, indium, silicon, aluminum, and bismuth, but are not limited thereto, and any elements capable of forming an alloy with lithium well suitable in the art may also be utilized. The thin film is formed of any one of the metals or an alloy of one or more suitable types (kinds) of metals. By disposing the thin film on a surface of the negative current collector 21, the second negative active material layer plated between the thin film and the first negative active material layer 22 becomes flatter, thereby further improving cycle characteristics of the all-solid secondary battery 1.

For example, the thin film may have a thickness of 1 nm to 800 nm, 10 nm to 700 nm, 50 nm to 600 nm, or 100 nm to 500 nm. In the case where the thickness of the thin film is less than 1 nm, the function of the thin film is difficult to obtain. In the case where the thickness of the thin film is too large, the thin film absorbs lithium and an amount of plated lithium in the negative electrode decreases, and thus energy density of the all-solid secondary battery 1 may decrease and cycle characteristics of the all-solid secondary battery 1 may deteriorate. The thin film may be formed on the negative current collector 21 by, for example, vacuum deposition, sputtering, or plating. However, the method is not limited thereto and any method capable of forming the thin film and commonly utilized in the art may also be utilized.

In some embodiments, the negative electrode current collector 21 (i.e., negative current collector) may include, for example, a base film and a metal layer provided on at least one side of the base film (e.g., or both (e.g., simultaneously) sides of the base film). The base film may include, for example, a polymer. The polymer may be, for example, a thermoplastic polymer. The polymer may be, for example, polyethylene terephthalate (PET), polyethylene (PE), polypropylene (PP), polybutylene terephthalate (PBT), polyimide (PI), or any combination thereof. The polymer may be an insulating polymer. Because the base film includes an insulating thermoplastic polymer, the base film is softened or liquefied to block or reduce the operation of a battery in the case of occurrence of a short circuit, so that a rapid current increase may be inhibited. The metal layer may include, for example, copper (Cu), stainless steel, titanium (Ti), iron (Fe), cobalt (Co), nickel (Ni), or an alloy thereof. The metal layer may correspond to, for example, the first metal substrate. The metal layer may further include a coating layer including the second metal. The negative electrode current collector 21 (i.e., negative current collector) may further include a metal chip and/or a lead tab. For more detailed descriptions of the base film, the metal layer, the metal chip, and the lead tab of the negative electrode current collector 21 (i.e., negative current collector), refer to the positive current collector (e.g., positive electrode current collector). Because the negative electrode current collector 21 (i.e., negative current collector) has the described structure, the weight of the negative electrode may be reduced, and accordingly, energy density of the negative electrode and the lithium battery may be increased.

### Negative electrode Layer: Second Inactive Member

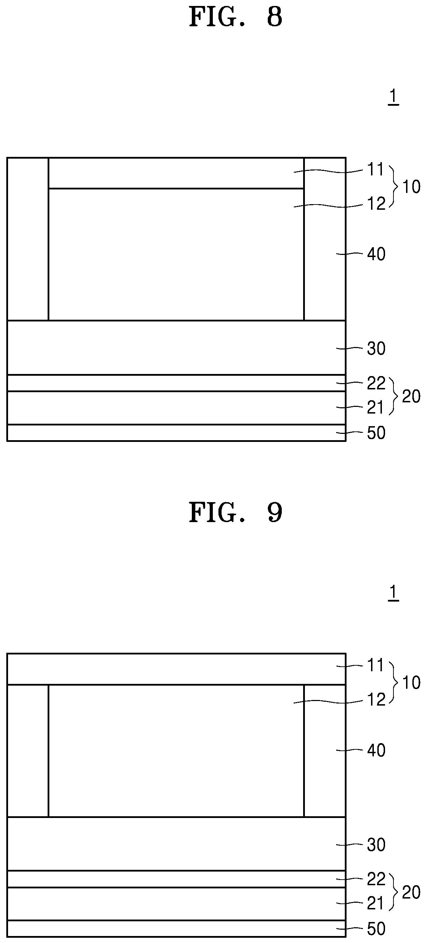

Referring to FIGS. 8 to 11, the all-solid secondary battery 1 further includes a second inactive member 50, 50a, 50b, or 50c provided on second surface of the negative current collector 21.

The second inactive member 50 is distinguished from the first inactive member 40 in that the second inactive member 50 has conductivity (e.g., is a conductor) by additionally including a conductive material. The second inactive member 50 is, for example, a conductive flame-retardant inactive member

For example, the conductive material may be graphite, carbon black, acetylene black, Ketjen black, Denka black, carbon fiber, carbon nanotube (CNT), graphene, metal fiber, or metal powder. The second inactive member 50 may have an electronic conductivity of, for example, 100 times or more, 1000 times or more, or 10000 times or more at 25°C that of an electronic conductivity of the first inactive member 40 at 25°C .

The second inactive member 50 includes, for example, a matrix, a filler, and a conductive material. The matrix may include, for example, a substrate and a reinforcement. The second inactive member 50 may further include a filler, a binder, and/or the like. An amount of the conductive material included in the second inactive member 50 is, for example, from 1 parts by weight to 30 parts by weight, from 1 parts by weight to 20 parts by weight, from 1 parts by weight to 15 parts by weight, from 1 parts by weight to 10 parts by weight, from 5 parts by weight to 40 parts by weight, from 5 parts by weight to 30 parts by weight, or from 5 parts by weight to 35 parts by weight based on 100 parts by weight of the second inactive member 50.

The second inactive member 50 has, for example, a Young's modulus that is smaller than that of the negative current collector 21 (i.e., a Young's modulus of the negative current collector 21). The Young's modulus of the second inactive member 50 is, for example, 50 % or less, 30 % or less, 10 % or less, or 5 % or less of the Young's modulus of the negative current collector 21. The Young's modulus of the second inactive member 50 is, for example, from 0.01 % to 50 %, from 0.1 to 30 %, from 0.1 to 10 %, or from 1 to 5 % of the Young's modulus of the negative current collector 21. The Young's modulus of the second inactive member 50 is, for example, 100 MPa or less, 50 MPa or less, 30 MPa or less, 10 MPa or less, or 5 MPa. The Young's modulus of the second inactive member 50 is, for example, from 0.01 MPa to 100 MPa, from 0.1 MPa to 50 MPa, from 0.1 MPa to 30 MPa, from 0.1 MPa to 10 MPa, or from 1 MPa to 5 MPa.

Because the second inactive member 50, 50a, or 50b has conductivity (e.g., is a conductor), the function as the second inactive member 50 may be performed. In some embodiments, because the second inactive member 50, 50a, or 50b has a lower Young's modulus than that of the negative current collector 21, a volume change of the negative electrode layer 20 may be more effectively accepted during charging and discharging of the all-solid secondary battery 1. As a result, the second inactive member 50, 50a, or 50b effectively reduces internal stress caused by the volume change of the all-solid secondary battery 1 during charging and discharging of the all-solid secondary battery 1, and thus cycle characteristics of the all-solid secondary battery 1 may further be improved.

A thickness of the second inactive member 50 is, for example, greater than that of the first negative active material layer 22. Because the second inactive member 50 has a greater thickness that that of the first negative active material layer 22, the volume change of the negative electrode layer 20 may be more effectively accepted during charging and discharging. A thickness of the first negative active material layer 22 is 50 % or less, 40 % or less, 30 % or less, 20 % or less, or 10 % or less of the thickness of the second inactive member 50. The thickness of the first negative active material layer 22 is, for example, from 1 % to 50 %, from 1 % to 40 %, from 1 % to 30 %, from 1 % to 20 %, or from 1 % to 10 % of the thickness of the second inactive member 50. The thickness of the second inactive member 50 is, for example, from 1 µm to 300 µm, from 10 µm to 300 µm, from 50 µm to 300 µm, or from 100 µm to 200 µm. In the case where the second inactive member 50 has a too small thickness, the intended effects thereof may not be provided. In the case where the second inactive member 50 has a too large thickness, energy density of the all-solid secondary battery 1 may decrease. A shape of the second inactive member 50 is not limited and may be selected according to a shape of the all-solid secondary battery 1. The second inactive member 50 may be, for example, in the form of a sheet, a rod, or a gasket.

The second inactive member 50 may be provided on at least one surface (e.g., one surface or both (e.g., opposite) surfaces) of one all-solid secondary battery 1. The second inactive member 50 may be provided, for example, between a plurality of stacked all-solid secondary batteries 1. For example, the second inactive member 50 may be provided between the stacked plurality of all-solid secondary batteries 1, an uppermost surface, and/or a lowermost surface.

A ratio of a volume of the all-solid secondary battery 1 before charging to a volume of the all-solid secondary battery 1 after charging, i.e., a volume expansion rate, may be, for example, 15 % or less, 10 % or less, or 5 % or less.

An increased volume of the negative electrode layer 20 during charging of the all-solid secondary battery 1 is offset by a decreased volume of the positive electrode layer 10, and the second inactive member 50 accepts the volume change of the negative electrode layer 20, the volume change before and after charging of the all-solid secondary battery 1 may be reduced.

The energy density per unit volume of the all-solid secondary battery 1 may be, for example, from 500 watt hour per liter (Wh/L) to 900 Wh/L, from 500 Wh/L to 800 Wh/L, or from 500 Wh/L to 700 Wh/L. The energy density per unit weight of the all-solid secondary battery 1 may be, for example, from 350 watt hour per gram (Wh/g) to 600 Wh/g, from 350 Wh/g to 580 Wh/g, from 350 Wh/g to 570 Wh/g, or from 350 Wh/g to 550 Wh/g. In the case where the all-solid secondary battery 1 has the energy density within the ranges described above, the all-solid secondary battery 1 may provide increased energy density compared secondary batteries.

### Solid Electrolyte Layer

### Solid Electrolyte Layer: Solid Electrolyte

Referring to FIGS. 3 to 11, an electrolyte layer provided between the positive electrode layer 10 and the negative electrode layer 20. The electrolyte layer may comprise an electrolyte. The electrolyte may include, for example, a solid electrolyte, gel electrolyte or a combination thereof. The solid electrolyte may include, for example, a sulfide-based solid electrolyte, an oxide-based solid electrolyte, a polymer solid electrolyte, or any combination thereof. Referring to FIGS. 3 to 11, the solid electrolyte layer 30 includes a solid electrolyte provided between the positive electrode layer 10 and the negative electrode layer 20.

The sulfide-based solid electrolyte may be selected from the sulfide-based solid electrolytes included in the described positive active material layer.

The oxide-based solid electrolyte may include, for example, Li_{1+x+y}AlₓTi₂₋ₓSi_{y}P_{3-y}O₁₂ (where 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (where M = Te, Nb, or Zr, and , 0≤x≤10), or any combination thereof. The oxide-based solid electrolyte is manufactured, for example, by a sintering method, and/or the like.

For example, the oxide-based solid electrolyte is, for example, a garnet-type or kind solid electrolyte selected from Li₇La₃Zr₂O₁₂ (LLZO) and Li₃₊ₓLa₃Zr₂₋ₐMₐO₁₂ (M doped LLZO, where M=Ga, W, Nb, Ta, or Al, 0<a<2, and 0≤x≤10).

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include (e.g., may exclude) a liquid. The polymer solid electrolyte includes a polymer, and examples of the polymer include polyethylene oxide (PEO), polyvinylidene fluoride (PVDF), vinylidene fluoride-hexafluoropropylene (PVDF-HFP), poly(styrene-b-ethylene oxide) block or reduce copolymer (PS-PEO), poly(styrene-butadiene), poly(styrene-isoprene-styrene), poly(styrene-b-divinylbenzene) block or reduce copolymer, poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylene dioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazo-benzisoquinolinones)] (SPBIBI), poly(styrene sulfonate) (PSS), lithium 9,10-diphenylanthracene-2-sulfonate (DPASLi+), or any combination thereof. However, the embodiment is not limited thereto, and any polymer electrolytes commonly available in the art may also be utilized. Any lithium salts commonly available in the art may also be utilized. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ+1SO₂)(C_{y}F_{2y}+1SO₂) (where x and y may each independently be from 1 to 20), LiCl, Lil, or any mixture thereof.

In some embodiments, the polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

In some embodiments, the solid electrolyte layer (30) may include, for example, a gel electrolyte. The gel electrolyte is, for example, a polymer gel electrolyte. For example, the gel electrolyte may have a gel state without including a polymer. The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte.

In some embodiments, the organic solvent may be selected from organic solvents utilized in liquid electrolytes. The lithium salt may be selected from lithium salts utilized in polymer solid electrolyte.

The ionic liquid refers to a salt in a liquid state, and a molten salt at room temperature composed solely of ions and having a melting point room temperature. The ionic liquid may include, for example, at least one compound including a) at least one cation selected from among ammonium, pyrimidium, pyridinium, imidazolium, piperidinium, pyrazolium, oxazolium, pyridazinium, phosphonium, sulfonium, triazole, and any mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

In some embodiments, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

The solid electrolyte layer 30 is impermeable to lithium polysulfide. Therefore, side reactions between the negative electrode layer and lithium polysulfide produced during charging and discharging of the sulfide-based positive active material may be inhibited. Therefore, cycle characteristics of the all-solid secondary battery 1 including the solid electrolyte layer 30 may be improved.

### Solid Electrolyte layer: Binder

The solid electrolyte layer 30 may further include, for example, a binder. The binder included in the solid electrolyte layer 30 is, for example, styrene butadiene rubber (SBR), polytetrafluoroethylene, polyvinylidene fluoride, or polyethylene, but is not limited thereto, and any binders commonly available in the art may also be utilized. The binder of the solid electrolyte layer 30 may be the same as or different from the binders included in the positive active material layer 12 and the first negative active material layer 22. The binder may not be provided.

An amount of the binder included in the solid electrolyte layer 30 is from 0.1 wt% to 10 wt%, from 1 wt% to 5 wt%, from 1 wt% to 3 wt%, or from 1 wt% to 2 wt% based on a total weight of the solid electrolyte layer 30.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, one or more example embodiments of the present disclosure will be described in more detail with reference to the following examples and comparative examples. However, these examples are not intended to limit the purpose and scope of the one or more example embodiments.

### EXAMPLES

### Example 1: Mono-cell All-solid Secondary Battery, Flame-retardant Positive Electrode Gasket, Composite Electrolyte (polymer/lithium salt+ionic liquid) 5 wt%, Ionic liquid A (lithium polysulfide solubility of 5 wt% or less)

### Preparation of Negative Electrode Layer

A stainless steel (SUS) foil having a thickness of 10 micrometer (µm) was prepared as a negative current collector. In some embodiments, carbon black (CB) with a primary particle diameter of about 30 nanometer (nm) and particles of silver (Ag) with an average particle diameter of about 60 nm were prepared as negative active materials.

4 g of mixed powder of the carbon black (CB) and silver (Ag) particles in a weight ratio of 3:1 was added to a container, and 4 g of a N-methyl pyrrolidone (NMP) solution including 7 wt% of a polyvinylidene fluoride (PVDF) binder (# 9300 manufactured by Kureha Corporation) was added thereto to prepare a mixed solution. Subsequently, NMP was gradually added to the mixed solution while stirring the mixed solution to prepare a slurry. The prepared slurry was applied to the SUS sheet utilizing a bar coater and dried in the air at 80 °C for 10 minutes. A stack structure obtained thereby was dried at 40 °C for 10 hours in a vacuum. The dried stack structure was cold rolled by a cold roll press at a pressure of 5 ton-force per square centimeter (ton·f/cm²) at a speed of 5 meter per second (m/sec) to planarize the surface of the first negative active material layer of the stack structure. According to the described process, a negative electrode layer was prepared. A thickness of the first negative active material layer included in the negative electrode layer was about 15 µm. An area of the first negative active material layer was identical to that of the negative current collector.

### Preparation of Positive Electrode Layer

A Li₂S-CNF composite was prepared as a positive active material. The Li₂S-CNF composite was prepared according to a method disclosed in Electrochimica Acta 230 (2017) 279-284. Argyrodite-type or kind crystalline (e.g., argyrodite crytalline) Li₆PS₅Cl (D50=3.0 µm, crystalline) was prepared as a solid electrolyte layer. Ketjen black was prepared as a conductive material. Polyethylene oxide (Mw = ~ 600,000 Da) was utilized as a polymer. Lithium bis(trifluoromethanesulfonyl)imide (LiTFSI) was utilized as a lithium salt. As an ionic liquid, 1-methyl-1-propylpyrrolidinium bis(trifluoromethanesulfonyl)imide represented by Formula A was utilized. 1-methyl-1-propylpyrrolidinium bis(trifluoromethanesulfonyl)imide had a dielectric constant of 11.7. The polymer was mixed with the lithium salt to prepare a mixture. A mixing molar ratio of the polymer to the lithium salt (polymer/lithium salt) was 15:1.

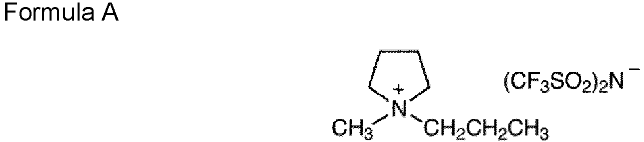

These materials were mixed such that a weight ratio of the positive active material: the solid electrolyte: the conductive material: the polymer/lithium salt: the ionic liquid was 40:45:10:3:2 to prepare a positive electrode mixture. The positive electrode mixture was prepared by dry mixing utilizing a ball mill. The positive electrode mixture obtained by ball milling formed an ion-conductive and electron-conductive network.

The positive electrode mixture was provided on one surface of the carbon-coated aluminum foil or one surface of the positive current collector formed of SUS and pressed by utilizing a plate press at a pressure of 200 megapascal (MPa) for 10 minutes to prepare a positive electrode layer. The positive electrode layer had a thickness of about 120 µm. The positive active material layer had a thickness of about 100 µm, and a carbon-coated aluminum foil had a thickness of about 20 µm.

### Preparation of Solid Electrolyte Layer

Argyrodite-type or kind crystalline Li₆PS₅Cl solid electrolyte (D₅₀=3.0 µm, crystalline) was prepared. 1.5 parts by weight or an acrylic binder was added to 98.5 parts by weight of the solid electrolyte to prepare a mixture. Octyl acetate was added to the prepared mixture while stirring to prepare a slurry. The prepared slurry was applied to a 15 µm-thick non-woven fabric located on a 75 µm-thick PET substrate by utilizing a bar coater, and dried in the air at 80 °C for 10 minutes to obtain a stack structure. The obtained stack structure was dried in a vacuum at 80°C for 2 hours. According to the described process, a solid electrolyte layer was prepared.

### Flame-retardant Inactive Member

A slurry prepared by mixing pulp fibers (cellulose fibers), glass fibers, aluminum hydroxide (Al(OH)₃), an acrylic binder, and a solvent was molded in a gasket form, and the solvent was removed therefrom to prepare a flame-retardant inactive member.

A weight ratio of pulp fiber (cellulose fibers), glass fibers, aluminum hydroxide (Al(OH)₃), and the acrylic binder was 20:8:70:2. The inactive member had a thickness of 120 µm.

Before arranging the prepared flame-retardant inactive member on the solid electrolyte layer, heat treatment was performed in a vacuum at 80 °C for 5 hours to remove moisture and/or the like from the flame-retardant inactive member.

### Preparation of All-solid Secondary Battery

Referring to FIG. 3, the solid electrolyte layer was provided on the negative electrode layer such that the first negative active material layer was in contact with the solid electrolyte layer, and the positive electrode layer was provided on the solid electrolyte layer. A gasket was arranged around the positive electrode layer to surround the positive electrode layer and to be in contact with the solid electrolyte layer to prepare a stack structure. The gasket had a thickness of about 120 µm. As the gasket, the flame-retardant inactive member was utilized. The gasket was arranged to be in contact with side surfaces of the positive electrode layer and the solid electrolyte layer. The positive electrode layer was located at a central region of the solid electrolyte layer, and the gasket was located to surround the positive electrode layer and to extend to an end portion of the solid electrolyte layer. An area of the positive electrode layer was about 90 % of an area of the solid electrolyte layer, and the gasket was located over the entire area of the remaining 10 % area of the solid electrolyte layer on which the positive electrode layer was not located.

The prepared stack structure was added to a pouch and vacuum sealed. The vacuum-sealed pouch was subjected Warm Isostatic Press (WIP) treatment at 85 °C at a pressure of 500 MPa for 30 minutes to prepare an all-solid secondary battery. By such pressing treatment, the solid electrolyte layer is sintered and interfacial contact is improved, thereby improving battery characteristics. Portions of the positive current collector and the negative current collector are extended to the outside of the sealed battery to be utilized as a positive electrode layer terminal and a negative electrode layer terminal. The sintered solid electrolyte layer had a thickness of about 45 µm. Li₆PS₅Cl solid electrolyte, as the argyrodite crystals, included in the sintered solid electrolyte layer had a density of 1.6 g/cc. An area of the solid electrolyte layer was identical to that of the negative electrode layer.

### Example 2: Mono-cell All-solid Secondary Battery, Flame-retardant Positive Electrode Gasket, and Composite Electrolyte (polymer/lithium salt+ionic liquid) 3 wt%

A positive electrode layer and an all-solid secondary battery were prepared in substantially the same manner as in Example 1, except that the composition of the positive electrode mixture was adjusted such that the weight ratio of the positive active material: the solid electrolyte: the conductive material: the polymer/lithium salt: the ionic liquid was 40:47:10:2:1.

### Example 3: Mono-cell All-solid Secondary Battery, Flame-retardant Positive Electrode Gasket, and Composite Electrolyte (polymer/lithium salt+ionic liquid) 1 wt%

A positive electrode layer and an all-solid secondary battery were prepared in substantially the same manner as in Example 1, except that the composition of the positive electrode mixture was adjusted such that the weight ratio of the positive active material: the solid electrolyte: the conductive material: the polymer/lithium salt: the ionic liquid was 40:49:10:0.7:0.3.

### Example 4: Mono-cell All-solid Secondary Battery, Flame-retardant Positive Electrode Gasket, and Flame-retardant Negative Electrode Sheet

An all-solid secondary battery was prepared in substantially the same manner as in Example 1, except that a conductive flame-retardant inactive member in the form of a sheet having the same area and shape as the stack structure was provided on the negative current collector of the pressed stack structure before adding the pressed stack structure to the pouch, and vacuum sealing the pouch. The conductive flame-retardant inactive member sheet was prepared according to a method described. The conductive flame-retardant inactive member sheet may serve as an elastic sheet.

### Conductive Flame-retardant Inactive member

A slurry prepared by mixing pulp fibers (cellulose fibers), glass fibers, aluminum hydroxide (Al(OH)₃), an acrylic binder, a conductive material (Denka black), and a solvent was molded in the form of a sheet, and dried to prepare a flame-retardant inactive member. A weight ratio of the pulp fibers (cellulose fibers), the glass fibers, the aluminum hydroxide (Al(OH)₃), the acrylic binder, and the conductive material was 20:8:50:2:20. The conductive flame-retardant inactive member had a thickness of 120 µm. The prepared conductive flame-retardant inactive member was heat treated in a vacuum at 80 °C for 5 hours before being provided on the negative current collector to remove moisture and/or the like from the conductive flame-retardant inactive member.

### Example 5: Bi-cell All-solid Secondary Battery

### Preparation of Bi-cell All-solid Secondary Battery

A positive electrode layer was prepared in substantially the same manner as in Example 1, except that the positive active material layers are provided on both (e.g., opposite) surfaces of the positive current collector.

A total thickness of the positive electrode layer was about 220 µm. Each of the positive active material layers had a thickness of about 100 µm, and the carbon-coated aluminum foil had a thickness of about 20 µm.

Two of each of the negative electrode layer, the solid electrolyte layer, and the flame-retardant inactive member were prepared in substantially the same manner as in Example 1.

Referring to FIG. 5, the solid electrolyte layer was provided on the negative electrode layer such that the first negative active material layer was in contact with the solid electrolyte layer, and the positive electrode layer was provided on the solid electrolyte layer. The positive electrode layer had a structure in which the positive active material layers were provided on both (e.g., simultaneously) surfaces of the positive current collector. The gasket was located around the positive electrode layer to surround the positive electrode layer and to be in contact with the solid electrolyte layer. The gasket had a thickness of about 220 µm. The gasket may have, for example, a stack structure in which two gaskets each having a thickness of 110 µm were stacked, or may be formed of one gasket having a thickness of 220 µm. As the gasket, the flame-retardant inactive member was utilized.

The gasket was located to be in contact with side surfaces of the positive electrode layer and the solid electrolyte layer. The positive electrode layer was located at a central region of the solid electrolyte layer, and the gasket is located to surround the positive electrode layer and to extend to an end portion of the solid electrolyte layer. The area of the positive electrode layer was about 90 % of the area of the solid electrolyte layer, and the gasket was located over the entire area of the remaining 10 % area of the solid electrolyte layer on which the positive electrode layer was not located. The solid electrolyte layer was provided on the positive electrode layer and the gasket, and the negative electrode layer was provided on the solid electrolyte layer to prepare a stack structure.

The prepared stack structure was added to a pouch and vacuum sealed. The vacuum-sealed pouch was subjected to Warm Isostatic Press (WIP) treatment at 85 °C at a pressure of 500 MPa for 30 minutes to prepare an all-solid secondary battery. By such pressing treatment, the solid electrolyte layer was sintered and interfacial contact was improved, thereby improving battery characteristics. Portions of the positive current collector and the negative current collector were extended to the outside of the sealed battery to be utilized as a positive electrode layer terminal and a negative electrode layer terminal. The sintered solid electrolyte layer had a thickness of about 45 µm. The argyrodite-type or kind crystalline Li₆PS₅Cl solid electrolyte included in the sintered solid electrolyte layer had a density of 1.6 g/cc. An area of the solid electrolyte layer was the same as an area of the negative electrode layer.

### Comparative Example 1: Polymer Alone (lithium salt- and ionic liquid-free)

A positive electrode layer and an all-solid secondary battery were prepared in substantially the same manner as in Example 1, except that a polymer was utilized alone by changing the mixing ratio of the polymer to the lithium salt to 100:0, and the composition of the positive electrode mixture was changed such that the weight ratio of the positive active material: the solid electrolyte: the conductive material: the polymer: the ionic liquid was 40:47:10:3:0. An ionic liquid was not used.

### Comparative Example 2: Ionic Liquid B (lithium polysulfide solubility exceeding 5 wt%)

A positive electrode layer and an all-solid secondary battery were prepared in substantially the same manner as in Example 1, except that an ionic liquid of Formula B was utilized instead of the ionic liquid of Formula A.

### Comparative Example 3: Organic Solvent (lithium polysulfide solubility exceeding 5 wt%)

A positive electrode layer and an all-solid secondary battery were prepared in substantially the same manner as in Example 1, except that a mixed solvent of 1,2-dimethoxyethane (DME) and 1,3-dioxolane (DOL) (volume ratio of 1:1) was utilized instead of the ionic liquid of Formula A.

### Comparative Example 4: Sulfide-based Positive Active Material and Inactive Member-free

An all-solid secondary battery was prepared in substantially the same manner as in Example 1, except that the flame-retardant inactive member (i.e., gasket) was not utilized in the manufacturing of the all-solid secondary battery.

### Evaluation Example 1: Evaluation of Lithium Polysulfide Solubility

Saturated solubility of lithium polysulfide was measured at 25 °C respectively in Ionic Liquid A represented by Formula A and utilized in Example 1, Ionic Liquid B (1-butyl-1-methylpyrrolidinium trifluoromethane sulfonate) utilized in Comparative Example 2, and the DME/DOL mixed solvent utilized in Comparative Example 3, and measurement results are shown in Table 1.

The saturated solubility of lithium polysulfide was measured according to a method described.

Powders of S₈ and Li₂S were milled in an inert atmosphere to prepare lithium polysulfide (Li₂S₈) powder. The prepared powder was added to the ionic liquid or the solvent and stirred at 60 °C for 100 hours and stored at 30 °C for 48 hours to prepare a solution including precipitates on the surface of a container. Based on the precipitates, it was confirmed that the prepared solution was a solution saturated with lithium polysulfide. A supernatant was separated from the saturated solution and added to an electrochemical cell, and then a maximum absorbency of S₈ reduced from the dissolved lithium polysulfide was analyzed by UV-VIS spectrum. Based on the maximum absorbency of S₈, a solubility limit of the lithium polysulfide, i.e., saturated solubility, was determined. The utilized electrochemical cell was a H-type or kind two-electrode cell including an operating electrode (carbon non-woven cloth), a counter electrode (lithium foil), and a lithium-conductive ceramic separator provided therebetween.

**Table 1**

| | Saturated solubility of lithium polysulfide (Li₂S₈) [wt%] |
|---|---|
| Example 1: Ionic Liquid A | 2 |
| 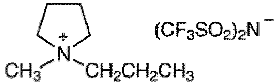 | |
| Comparative Example 2: Ionic Liquid B | 9 |
| 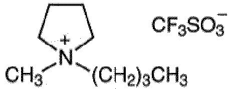 | |
| Comparative Example 3: Organic Solvent (DME:DOL=1:1(v/v)) | 25 |

As shown in Table 1 and relatively, although a low saturated solubility of lithium polysulfide of 5 wt% or less was obtained in Ionic Liquid A utilized in Example 1, high saturated solubilities of lithium polysulfide greater than 5 wt% were obtained in Ionic Liquid B utilized in Comparative Example 2 and in the organic solvent utilized in Comparative Example 3. Because Ionic Liquid A includes anions with large ionic radii and cations corresponding to the anions, reduced (e.g., decreased) lithium polysulfide solubility was obtained. In contrast, because Ionic Liquid B includes anions with reduced (e.g., decreased) ionic radii and cations corresponding to the anions, increased lithium polysulfide solubility was obtained. Therefore, while elution of lithium polysulfide from the positive active material was inhibited during a charging and discharging process in the all-solid secondary battery of Example 1, it was difficult to inhibit elution of lithium polysulfide from the positive active material during the charging and discharging process in the all-solid secondary batteries of Comparative Examples 2 and 3.

### Evaluation Example 2: Charging/discharging Test

Charging and discharging characteristics of each of the all-solid secondary batteries prepared in Examples 1 to 5 and Comparative Examples 1 to 4 were evaluated by the following charging/discharging test. The charging/discharging test was performed by immersing each all-solid secondary battery in a thermostatic bath at 45 °C.

A first cycle was performed by charging at a constant current of 0.05 C for 20 hours until a battery voltage reached 2.7 V to 2.8 V. Subsequently, discharging was performed at a constant current of 0.05 C for 20 hours until the battery voltage reached 0.5 V to 1.0 V.

A second cycle was performed by performing charging at a constant current of 0.1 C for 10 hours until the battery voltage reached 2.7 V to 2.8 V. Subsequently, discharging was performed at a constant current of 0.1 C for 10 hours until the battery voltage reached 0.5 V to 1.0 V.

A third cycle was performed at a constant current of 0.5 C for 2 hours until the battery voltage reached 2.7 V to 2.8 V. Subsequently, discharging was performed at a constant current of 0.5 C for 2 hours until the battery voltage reached 0.5 V to 1.0 V.

Short circuits during the charging and discharging processes up to the third cycle are shown in Table 2.

A short circuit occurred before the first cycle was completed is marked by o, a short circuit occurred at the second cycle is marked by △, and no short circuit occurred until the third cycle was completed is marked by ×.

**Table 2**

| | Short circuit |
|---|---|
| Example 1 (flame-retardant positive electrode gasket, composite electrolyte 5 wt%, Ionic Liquid A) | × |
| Example 2 (flame-retardant positive electrode gasket, composite electrolyte 3 wt%, Ionic Liquid A) | × |
| Example 3 (flame-retardant positive electrode gasket, composite electrolyte 1 wt%, Ionic Liquid A) | × |
| Example 4 (flame-retardant positive electrode gasket, flame-retardant negative electrode sheet, composite electrolyte 5 wt%, Ionic Liquid A) | × |
| Example 5 (bi-cell) | × |
| Comparative Example 1 (flame-retardant positive electrode gasket, composite electrolyte 0 wt% (binder alone)) | × |
| Comparative Example 2 (flame-retardant positive electrode gasket, composite electrolyte 5 wt%, Ionic Liquid B) | × |
| Comparative Example 3 (flame-retardant positive electrode gasket, composite electrolyte 5 wt%, organic solvent) | × |
| Comparative Example 4 (flame-retardant positive electrode gasket member-free) | ○ |

As shown in Table 2, the all-solid secondary batteries of Examples 1 to 5 exhibited improved cycle characteristics compared to the all-solid secondary battery of Comparative Example 4.

### Evaluation Example 3: Evaluation of High-temperature Lifespan Characteristics

Charging and discharging characteristics of each of the all-solid secondary batteries prepared in Examples 1 to 5 and Comparative Examples 1 to 4 were evaluated by the following charging/discharging test. The charging/discharging test was performed by immersing each all-solid secondary battery in a thermostatic bath at 45 °C.

A first cycle was performed by charging at a constant current of 0.6 milliampere per square centimeter (mA/cm²) for 10 hours until a battery voltage reached 2.7 V to 2.8 V. Subsequently, discharging was performed at a constant current of 0.6 mA/cm² for 10 hours until the battery voltage reached 0.5 V to 1.0 V.

Charging and discharging characteristics of the all-solid secondary battery prepared in Comparative Example 2 were evaluated by the following charging/discharging test. The charging/discharging test was performed by immersing each all-solid secondary battery in a thermostatic bath at 45 °C.

A first cycle was performed by charging at a constant current of 0.6 mA/cm² for 10 hours until a battery voltage reached 2.7 V to 2.8 V. Subsequently, discharging was performed at a constant current of 0.6 mA/cm² for 10 hours until the battery voltage reached 0.5 V to 1.0 V.

A discharge capacity of the first cycle was determined as a standard capacity. After the second cycle, charging and discharging were repeated up to 100 cycles under the same conditions as the first cycle. Measurement results are shown in Table 3.

A higher number of cycles required to reduce the discharge capacity to 90 % of the standard capacity after the second cycle was considered as excellent or suitable lifespan characteristics.

A short circuit occurred in the all-solid secondary battery of Comparative Example 4 before the first cycle was completed, and thus it was impossible to measure lifespan characteristics.

**Table 3**

| | No. of cycles [No.] |
|---|---|
| Example 1 (flame-retardant positive electrode gasket, composite electrolyte 5 wt%, Ionic Liquid A) | 60 |
| Example 2 (flame-retardant positive electrode gasket, composite electrolyte 3 wt%, Ionic Liquid A) | 40 |
| Example 3 (flame-retardant positive electrode gasket, composite electrolyte 1 wt%, Ionic Liquid A) | 30 |
| Example 4 (flame-retardant positive electrode gasket, flame-retardant negative electrode sheet, composite electrolyte 5 wt%, Ionic Liquid A) | 80 |
| Comparative Example 1 (flame-retardant positive electrode gasket, composite electrolyte 0 wt% (binder alone)) | 20 |
| Comparative Example 2 (flame-retardant positive electrode gasket, composite electrolyte 5 wt%, Ionic Liquid B) | 10 |
| Comparative Example 3 (flame-retardant positive electrode gasket, composite electrolyte 5 wt%, organic solvent) | 5 |
| Comparative Example 4 (flame-retardant positive electrode gasket member-free) | Impossible to measure |

As shown in Table 3, the all-solid secondary batteries of Examples 1 to 4 had superior lifespan characteristics to those of the all-solid secondary batteries of Comparative Examples 1 to 3.

In the all-solid secondary battery of Comparative Example 1, it was considered that lifespan characteristics deteriorated by an increase in internal resistance of the positive electrode layer because the composite electrolyte does not include a lithium salt and an ionic liquid.

In the all-solid secondary batteries of Comparative Examples 2 and 3, it was considered that lifespan characteristics of the all-solid secondary batteries deteriorated because the composite electrolyte failed to effectively inhibit elution and/or migration of lithium polysulfide.

It was considered that the all-solid secondary battery of Example 4 had improved lifespan characteristics compared to the all-solid secondary battery of Example 1 because stress of the negative electrode layer, in which a volume change was concentrated, was effectively reduced by additionally disposing the second inactive member on the negative current collector.

In some embodiments, the all-solid secondary battery having a bi-cell structure of Example 5 had improved lifespan characteristics due to the symmetrical structure compared to the all-solid secondary battery of Example 1 having a mono-cell structure, because the volume change was more effectively inhibited during manufacturing and charging and discharging.

As described herein, the all-solid secondary battery related to some embodiments may be applied to one or more suitable portable devices, vehicles, and/or the like.

Although embodiments are described above with reference to illustrated drawing, the present disclosure is not limited thereto. It is obvious that one or more suitable alternations and modifications will be apparent to one or ordinary skill in the art to which this application belongs within protection coverage of the present disclosure.

According to the all-solid secondary battery having a new structure according to one or more embodiments, an all-solid secondary battery having improved cycle characteristics may be provided.

FIG. 1 is a schematic diagram of a positive active material layer 12 including a composite electrolyte 400, according to some embodiments of the present disclosure.

FIG. 2 is a schematic diagram of a composite electrolyte-free positive active material layer 12, according to some embodiments of the related arts.

## Claims

1. An all-solid secondary battery (1) comprising:
a positive electrode layer (10) comprising a positive current collector (11) and a positive active material layer (12) on at least one of an upper surface or a lower surface of the positive current collector (11);
a negative electrode layer (20); and
a solid electrolyte layer (30) between the positive electrode layer (10) and the negative electrode layer (20),
wherein the positive active material layer (12) comprises a lithium-containing sulfide-based positive active material (100) and a composite electrolyte (400),
wherein the lithium-containing sulfide-based positive active material (100) comprises Li₂S, a Li₂S-containing composite, or any combination thereof, and
the composite electrolyte (400) comprises a polymer (410), a lithium salt, and an ionic liquid (420), and
wherein the ionic liquid (420) has a saturated solubility of lithium polysulfide of 5 wt% or less at 25 °C as measured according to the description.

2. The all-solid secondary battery (1) as claimed in claim 1, wherein the composite electrolyte (400) further comprises lithium polysulfide, and
an amount of the lithium polysulfide is 5 wt% or less based on a total weight of the composite electrolyte (400).

3. The all-solid secondary battery (1) as claimed in claim 1 or 2, wherein the ionic liquid (420) is represented by Formula 1 or 2: 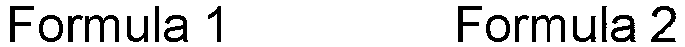 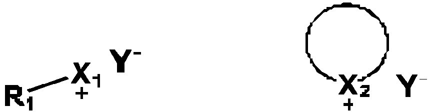 wherein in Formula 1,
X₁ is -N(R₂)(R₃)(R₄) or -P(R₂)(R₃)(R₄), and
R₁, R₂, R₃, and R₄ are each independently an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkylene oxide group,
in Formula 2, 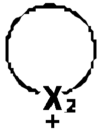 is a heterocycloalkyl ring or heteroaryl ring comprising 1 to 3 hetero atoms and 2 to 30 carbon atoms, and the ring is unsubstituted or substituted with a substituent, and
X₂ is -N(R₅)(R₆), -N(R₅)=, -P(R₅)(R₆), or -P(R₅)=,
the substituent of the ring, R₅, and R₆ are each independently hydrogen, an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
Y⁻ is an anion.

4. The all-solid secondary battery (1) as claimed in claims 1 to 3, wherein the ionic liquid (420) is represented by Formula 3 or 4: 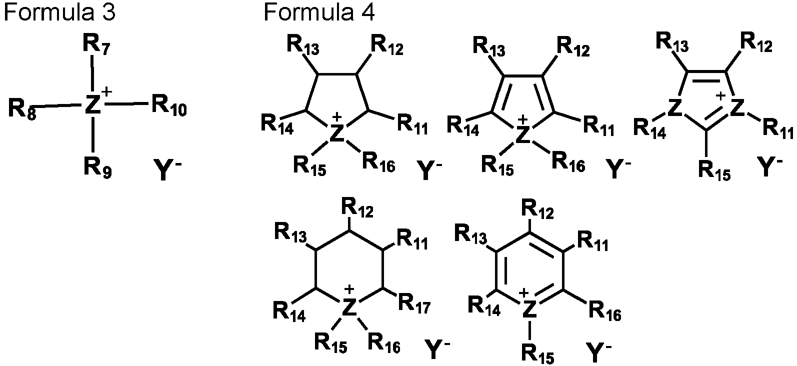 wherein in Formula 3,
Z is N or P, and
R₇, R₈, R₉, and R₁₀ are each independently an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and
wherein in Formula 4,
Z is N or P,
R₁₁, R₁₂, R₁₃, R₁₄, R₁₅, R₁₆, and R₁₇ are each independently hydrogen, an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and
Y⁻ is an anion.

5. The all-solid secondary battery (1) as claimed in claims 1 to 4, wherein the anion comprises BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, PF₆⁻, ClO₄⁻, bis(oxalate)borate (BOB⁻), CF₃SO₃⁻, CF₃CO₂⁻, (FSO₂)₂N⁻, (C₂F₅SO₂)₂N⁻, (C₂F₅SO₂)(CF₃SO₂)N⁻, (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, C₂N₃⁻, (O(CF₃)₂C₂(CF₃)₂O)₂PO⁻, (FSO₂)₂N⁻, (CF₃SO₂)₂N⁻, or any combination thereof.

6. The all-solid secondary battery (1) as claimed in claims 1 to 5, wherein the ionic liquid (420) comprises 1-methyl-1-propylpyrrolidinium bis(fluorosulfonyl)imide, 1-methyl-1-butylpyrrolidinium bis(fluorosulfonyl)imide, 1-methyl-1-propylpyrrolidinium bis(trifluoromethanesulfonyl)imide, 1-methyl-1-butylpyrrolidinium bis(trifluoromethanesulfonyl)imide, or any combination thereof, and
the ionic liquid (420) has a dielectric constant of 15 or less; and/or
wherein an amount of the ionic liquid (420) is at most about 10 wt% based on a total weight of the positive active material layer (12) or from about 1 wt% to about 40 wt% based on a total weight of the composite electrolyte (400).

7. The all-solid secondary battery (1) as claimed in claims 1 to 6, wherein the polymer (410) comprises polyacrylonitrile (PAN), polymethyl methacrylate (PMMA), polyimide (PI), polytetrafluoroethylene (PTFE), polyvinylidene fluoride (PVDF), polyvinylidene fluoride-hexafluoropropylene (PVDF-HFP), styrene-butadiene rubber (SBR), polyvinylpyrrolidone (PVP), polyethylene oxide (PEO), tetrafluoroethylene-perfluoroalkyl vinyl ether copolymer, vinylidene fluoride-chlorotrifluoroethylene copolymer, ethylene-tetrafluoroethylene copolymer, polychlorotrifluoroethylene, vinylidene fluoride-pentafluoropropylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethylvinylether-tetrafluoroethylene copolymer, ethylene-acrylic acid copolymer, or any combination thereof.

8. The all-solid secondary battery (1) as claimed in claims 1 to 7, wherein the lithium salt comprises at least one selected from among LiPF₆, LiBF₄, LiCF₃SO₃, LiC₂F₅SO₃, LiC₄F₉SO₃, LiN(SO₂F)₂ (LiFSI), LiN(CF₃SO₂)₂ (LiTFSI), LiN(SO₂CF₂CF₃)₂, LiSCN, LiN(CN)₂, Li(CF₃SO₂)₃C, LiCl, LiF, LiBr, Lil, LiB(C₂O₄)₂, LiBF₄, LiBF₃(C₂F₅), LiAsF₆, LiSbF₆, LiClO₄, and compounds represented by Formulae 11 to 14:

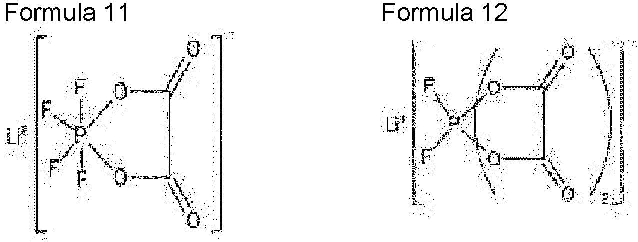

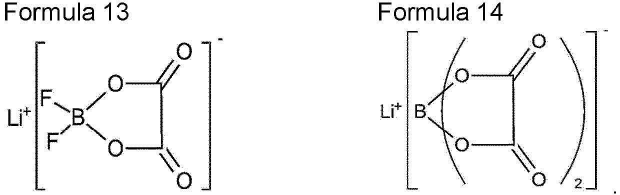

9. The all-solid secondary battery (1) as claimed in claims 1 to 8, wherein an amount of the composite electrolyte (400) is 10 wt% or less based on a total weight of the positive active material layer (12),
an amount of a combination of the polymer (410) and the lithium salt is 9 wt% or less based on the total weight of the positive active material layer (12), and
a molar ratio of the polymer (410) to the lithium salt is from 2:1 to 30:1.

10. The all-solid secondary battery (1) as claimed in claims 1 to 9, wherein the positive active material layer (12) further comprises a solid electrolyte (300), the solid electrolyte (300) comprising a sulfide-based solid electrolyte,
wherein the sulfide-based solid electrolyte comprises at least one selected from among Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers and Z is Ge, Zn, or Ga), Li₂S-GeS₂, Li₂S-SiS₂-Li₃PO₄, Li₂S-SiS₂-LiₚMO_{q} (where p and q are positive numbers and M is P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2),
the sulfide-based solid electrolyte comprises an argyrodite-type solid electrolyte comprising at least one selected from among Li₆PS₅Cl, Li₆PS₅Br, and Li₆PS₅I,
wherein the argyrodite-type solid electrolyte has a density of about 1.5 g/cc to about 2.0 g/cc, and
an amount of the sulfide-based solid electrolyte is from about 1 wt% to about 40 wt% based on a total weight of the positive active material layer (12); and/or
wherein the positive active material layer (12) further comprises a conductive material (200), and the conductive material (200) comprises a carbonaceous conductive material, and
wherein an amount of the carbonaceous conductive material is from about 1 wt% to about 40 wt% based on a total weight of the positive active material layer (12).

11. The all-solid secondary battery (1) as claimed in claims 1 to 10, wherein the Li₂S-containing composite comprises a composite of Li₂S and carbon, a composite of Li₂S, carbon, and a solid electrolyte (300), a composite of Li₂S and a solid electrolyte (300), a composite of Li₂S and a metal carbide, a composite of Li₂S, carbon, and a metal carbide, a composite of Li₂S and a metal nitride, a composite of Li₂S, carbon, and a metal nitride, or a combination thereof,
the positive active material layer (12) further comprises FeS₂, VS₂, NaS, MnS, FeS, NiS, CuS, or a combination thereof, and
an amount of the lithium-containing sulfide-based positive active material (100) is from about 5 wt% to about 95 wt% based on a total weight of the positive active material layer (12).

12. The all-solid secondary battery (1) as claimed in claims 1 to 11, further comprising a first inactive member (40) on one side surface of the positive electrode layer (10),
wherein the first inactive member (40) is on the solid electrolyte layer (30) and side surfaces of the positive electrode layer (10), and
the negative electrode layer (20) comprises a negative current collector (21) and a negative electrode material layer on a first surface of the negative current collector (21), and
the negative electrode active material layer (22) is not on a second surface of the negative current collector (21); and
wherein optional the positive electrode layer (10) comprises a positive current collector (11), a first positive active material layer (12), and a second positive active material layer (12), and
wherein the first positive active material layer (12) and the second positive active material layer (12) are respectively on a first surface and a second surface of the positive current collector (11),
the solid electrolyte layer (30) comprises a first solid electrolyte layer (30a) and a second solid electrolyte layer (30b) respectively in contact with the first positive active material layer (12) and the second positive active material layer (12),
the negative electrode layer (20) comprises a first negative electrode layer (20) and a second negative electrode layer (20) respectively in contact with the first solid electrolyte layer (30a) and the second solid electrolyte layer (30b), and
the first inactive member (40) is on side surfaces of the positive electrode layer (10) between the first solid electrolyte layer (30a) and the second solid electrolyte layer (30b) facing each other; and/or
wherein optional the first inactive member (40) comprises a flame-retardant inactive member,
wherein the flame-retardant inactive member comprises a matrix and a filler,
wherein the matrix comprises a substrate and a reinforcement,
wherein the substrate comprises a first fibrous material, the first fibrous material being an insulating material and comprising at least one selected from among pulp fibers, insulating polymer fibers, and ion-conductive polymer fibers,
the reinforcement comprises a second fibrous material, the second fibrous material being a flame-retardant inactive material and comprising at least one selected from glass fibers and ceramic fibers, and
the filler is a moisture getter and comprises a metal hydroxide, and
wherein the metal hydroxide comprises at least one selected from among Mg(OH)₂, Fe(OH)₃, Sb(OH)₃, Sn(OH)₄, Tl(OH)₃, Zr(OH)₄, and Al(OH)₃.

13. The all-solid secondary battery (1) as claimed in claims 1 to 12, wherein the negative electrode layer (20) comprises a negative current collector (21) and a first negative active material layer (22) on a first surface of the negative current collector (21),
wherein the first negative active material layer (22) comprises at least one selected from a carbonaceous negative active material and a metal-based negative active material, the metal-based negative active material is capable of forming an alloy or compound with lithium,
wherein the carbonaceous negative active material comprises amorphous carbon,
wherein the metal-based negative active material comprises at least one alloy forming element selected from among gold (Au), platinum (Pt), palladium (Pd), silicon (Si), silver (Ag), aluminum (Al), bismuth (Bi), tin (Sn), zinc (Zn), and combinations thereof,
wherein the metal-based negative active material comprises particles, and a particle diameter of the particles is about 10 nanometer (nm) to about 4 micrometer (µm), and
wherein the first negative active material layer (22) further comprises a binder; and wherein the all-solid secondary battery (1) optional further comprising a second inactive member (50, 50a, 50b, 50c) on a second surface of the negative current collector (21),
wherein the second inactive member (50, 50a, 50b, 50c) comprises a conductive flame-retardant inactive member, and
a Young's modulus of the second inactive member (50, 50a, 50b, 50c) is less than a Young's modulus of the negative current collector (21),
the Young's modulus of the second inactive member (50, 50a, 50b, 50c) is 100 MPa or less,
a thickness of the second inactive member (50, 50a, 50b, 50c) is greater than a thickness of the first negative active material layer (22), and
the thickness of the first negative active material layer (22) is 50 % or less than the thickness of the second inactive member (50, 50a, 50b, 50c).

14. The all-solid secondary battery (1) as claimed in claims 1 to 13, wherein the solid electrolyte layer (30) comprises an electrolyte,
wherein the electrolyte comprises a solid electrolyte (300), a gel electrolyte or a combination thereof,
wherein the solid electrolyte (300) comprises a sulfide-based solid electrolyte, an oxide-based solid electrolyte, a polymer solid electrolyte or a combination thereof.
wherein the gel electrolyte comprises a polymer gel electrolyte, and
wherein the solid electrolyte layer (30) is impermeable to lithium polysulfide.

15. The all-solid secondary battery (1) as claimed in claims 1 to 14, wherein
at least one of the positive current collector (11) or a negative current collector (21) comprises a base film and a metal layer on at least one surface of the base film, wherein the base film comprises a polymer, the polymer comprising polyethylene terephthalate (PET), polyethylene (PE), polypropylene (PP), polybutylene terephthalate (PBT), polyimide (Pl), or a combination thereof, and
wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

## Patentansprüche

1. Feststoff-Sekundärbatterie (1) umfassend:
eine Positivelektrodenschicht (10) umfassend einen positiven Stromabnehmer (11) und eine Positiv-Aktivmaterialschicht (12) auf wenigstens einer von einer einer oberen Oberfläche und einer unteren Oberfläche des positiven Stromabnehmers (11);
eine Negativelektrodenschicht (20); und
eine Festelektrolytschicht (30) zwischen der Positivelektrodenschicht (10) und der Negativelektrodenschicht (20),
wobei die Positiv-Aktivmaterialschicht (12) ein lithiumhaltiges Positiv-Aktivmaterial auf Sulfidbasis (100) und einen Verbundelektrolyten (400) umfasst,
wobei das lithiumhaltige Positiv-Aktivmaterial auf Sulfidbasis (100) Li₂S, einen Li₂S-haltigen Verbundstoff oder eine beliebige Kombination davon umfasst, und
der Verbundelektrolyt (400) ein Polymer (410), ein Lithiumsalz und eine ionische Flüssigkeit (420) umfasst, und
wobei die ionische Flüssigkeit (420) eine Sättigungslöslichkeit von Lithiumpolysulfid von 5 Gew-% oder weniger bei 25 °C, wie gemessen gemäß der Beschreibung, aufweist.

2. Feststoff-Sekundärbatterie (1) nach Anspruch 1, wobei der Verbundelektrolyt (400) ferner Lithiumpolysulfid umfasst, und
eine Menge des Lithiumpolysulfids 5 Gew.-% oder weniger bezogen auf das Gesamtgewicht des Verbundelektrolyten (400) beträgt.

3. Feststoff-Sekundärbatterie (1) nach Anspruch 1 oder 2, wobei die ionische Flüssigkeit (420) durch Formel 1 oder 2 dargestellt wird: 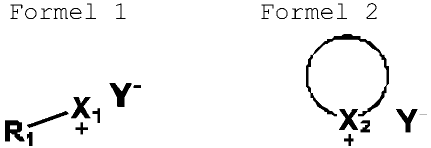 wobei in Formel 1
X₁ -N(R₂)(R₃)(R₄) oder -P(R₂)(R₃)(R₄) ist und
R₁, R₂, R₃ und R₄ jeweils unabhängig eine unsubstituierte oder halogensubstituierte C1-C30-Alkylgruppe, eine unsubstituierte oder halogensubstituierte C1-C30-Alkoxygruppe, eine unsubstituierte oder halogensubstituierte C6-C30-Arylgruppe, eine unsubstituierte oder halogensubstituierte C6-C30-Aryloxygruppe, eine unsubstituierte oder halogensubstituierte C3-C30-Heteroarylgruppe, eine unsubstituierte oder halogensubstituierte C3-C30-Heteroaryloxygruppe, eine unsubstituierte oder halogensubstituierte C4-C30-Cycloalkylgruppe, eine unsubstituierte oder halogensubstituierte C3-C30-Heterocycloalkylgruppe oder eine unsubstituierte oder halogensubstituierte C2-C100-Alkylenoxidgruppe sind,
in Formel 2, 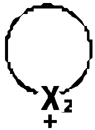 einen Heterocycloalkylring oder Heteroarylring darstellt, der 1 bis 3 Heteroatome und 2 bis 30 Kohlenstoffatomen umfasst, und der Ring unsubstituiert oder mit einem Substituenten substituiert ist, und
X₂ -N(R₅)(R₆), -N(R₅)=, -P(R₅)(R₆) oder -P(R₅)= ist,
der Substituent des Rings, R₅, und R₆ jeweils unabhängig Wasserstoff, eine unsubstituierte oder halogensubstituierte C1-C30-Alkylgruppe, eine unsubstituierte oder halogensubstituierte C1-C30-Alkoxygruppe, eine unsubstituierte oder halogensubstituierte C6-C30-Arylgruppe, eine unsubstituierte oder halogensubstituierte C6-C30-Aryloxygruppe, eine unsubstituierte oder halogensubstituierte C3-C30-Heteroarylgruppe, eine unsubstituierte oder halogensubstituierte C3-C30-Heteroaryloxygruppe, eine unsubstituierte oder halogensubstituierte C4-C30-Cycloalkylgruppe, eine unsubstituierte oder halogensubstituierte C3-C30-Heterocycloalkylgruppe oder eine unsubstituierte oder halogensubstituierte C2-C100-Alkylenoxidgruppe sind, und Y⁻ ein Anion ist.

4. Feststoff-Sekundärbatterie (1) nach Ansprüchen 1 bis 3, wobei die ionische Flüssigkeit (420) durch Formel 3 oder 4 dargestellt wird: 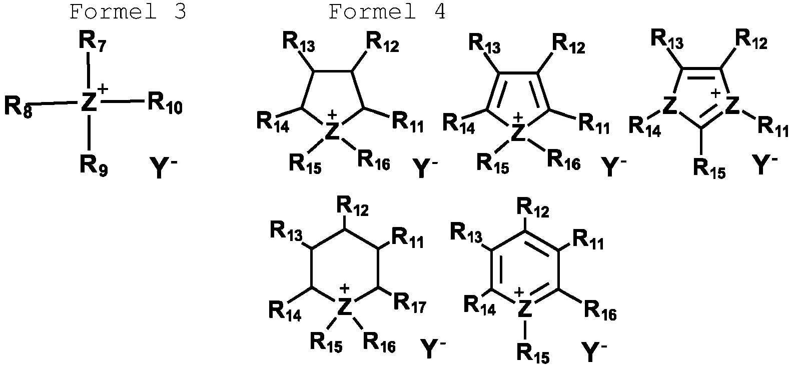 wobei in Formel 3
Z N oder P ist und
R₇, R₈, R₉ und R₁₀ jeweils unabhängig eine unsubstituierte oder halogensubstituierte C1-C30-Alkylgruppe, eine unsubstituierte oder halogensubstituierte C6-C30-Arylgruppe, eine unsubstituierte oder halogensubstituierte C3-C30-Heteroarylgruppe, eine unsubstituierte oder halogensubstituierte C4-C30-Cycloalkylgruppe oder eine unsubstituierte oder halogensubstituierte C3-C30-Heterocycloalkylgruppe sind, und
wobei in Formel 4
Z N oder P ist,
R₁₁, R₁₂, R₁₃, R₁₄, R₁₅, R₁₆ und R₁₇ jeweils unabhängig Wasserstoff, eine unsubstituierte oder halogensubstituierte C1-C30-Alkylgruppe, eine unsubstituierte oder halogensubstituierte C6-C30-Arylgruppe, eine unsubstituierte oder halogensubstituierte C3-C30-Heteroarylgruppe, eine unsubstituierte oder halogensubstituierte C4-C30-Cycloalkylgruppe oder eine unsubstituierte oder halogensubstituierte C3-C30-Heterocycloalkylgruppe sind, und
Y⁻ ein Anion ist.

5. Feststoff-Sekundärbatterie (1) nach Ansprüchen 1 bis 4, **dadurch gekennzeichnet, dass** das Anion BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, PF₆⁻, ClO₄⁻, Bis(oxalate)borat (BOB⁻), CF₃SO₃⁻, CF₃CO₂⁻, (FSO₂)₂N⁻, (C₂F₅SO₂)₂N⁻, (C₂F₅SO₂)(CF₃SO₂)N⁻ , (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, C₂N₃⁻, (O(CF₃)₂C₂(CF₃)₂O)₂PO⁻, (FSO₂)₂N⁻, (CF₃SO₂)₂N⁻ oder eine beliebige Kombination davon umfasst.

6. Feststoff-Sekundärbatterie (1) nach Ansprüchen 1 bis 5, **dadurch gekennzeichnet, dass** die ionische Flüssigkeit (420) 1-Methyl-1-propylpyrrolidinium-bis(fluorsulfonyl)imid, 1-Methyl-1-butylpyrrolidinium-bis(fluorsulfonyl)imid, 1-Methyl-1-propylpyrrolidinium-bis(trifluormethansulfonyl)imid, 1-Methyl-1-butylpyrrolidinium)bis(trifluormethansulfonyl)imid oder eine beliebige Kombination davon umfasst, und
die ionische Flüssigkeit (420) eine Dielektrizitätskonstante von 15 oder weniger aufweist; und/oder
wobei eine Menge der ionischen Flüssigkeit (420) höchstens etwa 10 Gew.-% bezogen auf ein Gesamtgewicht der Positiv-Aktivmaterialschicht (12) oder von etwa 1 Gew.-% bis etwa 40 Gew.-% bezogen auf ein Gesamtgewicht des Verbundelektrolyten (400) beträgt.

7. Feststoff-Sekundärbatterie (1) nach Ansprüchen 1 bis 6, wobei das Polymer (410) Polyacrylnitril (PAN), Polymethylmethacrylat (PMMA), Polyimid (PI), Polytetrafluorethylen (PTFE), Polyvinylidenfluorid (PVDF), Polyvinylidenfluorid-Hexafluorpropylen (PVDF-HFP), Styrol-Butadien-Kautschuk (SBR), Polyvinylpyrrolidon (PVP), Polyethylenoxid (PEO), Tetrafluorethylen-Perfluoralkylvinylether-Copolymer, Vinylidenfluorid-Chlortrifluorethylen-Copolymer, Ethylen-Tetrafluorethylen-Copolymer, Polychlortrifluorethylen, Vinylidenfluorid-Pentafluorpropylen-Copolymer, Propylen-Tetrafluorethylen-Copolymer, Ethylen-Chlortrifluorethylen-Copolymer, Vinylidenfluorid-Hexafluorpropylen-Tetrafluorethylen-Copolymer, Vinylidenfluorid-Perfluormethylvinylether-Tetrafluorethylen-Copolymer, Ethylen-AcrylsäureCopolymer oder eine beliebige Kombination davon umfasst.

8. Feststoff-Sekundärbatterie (1) nach Ansprüchen 1 bis 7, wobei das Lithiumsalz wenigstens eines ausgewählt aus LiPF₆, LiBF₄, LiCF₃SO₃, LiC₂F₅SO₃, LiC₄F₉SO₃, LiN(SO₂F)₂ (LiFSI), LiN(CF₃SO₂)₂ (LiTFSI), LiN(SO₂CF₂CF₃)₂, LiSCN, LiN(CN)₂, Li(CF₃SO₂)₃C, LiCl, LiF, LiBr, LiI, Lib(C₂O₄)₂, LiBF₄, LiBF₃(C₂F₅), LiAsF₆, LiSbF₆, LiClO₄ und Verbindungen dargetsellt durch die Formeln 11 bis 14 umfasst:

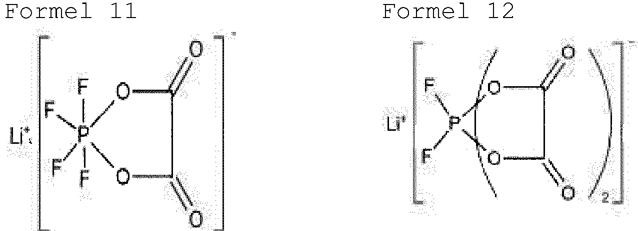

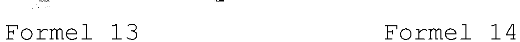

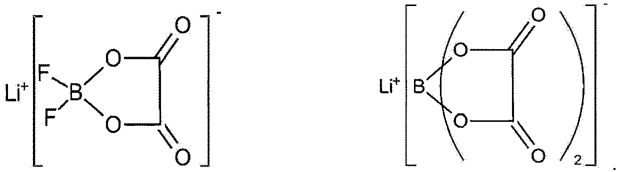

9. Feststoff-Sekundärbatterie (1) nach Ansprüchen 1 bis 8, wobei eine Menge des Verbundelektrolyten (400) 10 Gew.-% oder weniger bezogen auf ein Gesamtgewicht der Positiv-Aktivmaterialschicht (12) beträgt,
eine Menge einer Kombination des Polymers (410) und des Lithiumsalzes 9 Gew.-% oder weniger bezogen auf das Gesamtgewicht der Positiv-Aktivmaterialschicht (12) beträgt, und
ein Molverhältnis des Polymers (410) zu dem Lithiumsalz 2:1 bis 30:1 beträgt.

10. Feststoff-Sekundärbatterie (1) nach Ansprüchen 1 bis 9, wobei die Positiv-Aktivmaterialschicht (12) ferner einen Festelektrolyten (300) umfasst, wobei der Festelektrolyt (300) einen Festelektrolyten auf Sulfidbasis umfasst,
wobei der Festelektrolyt auf Sulfidbasis wenigstens eines ausgewählt aus Li₂S-P₂S₅, Li₂S-P₂S₅-LiX (wobei X ein Halogen ist), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wobei m und n positive Zahlen sind und Z Ge, Zn oder Ga ist), Li₂S-GeS₂, Li₂S-SiS₂-Li₃PO₄, Li₂S-SiS₂-LiₚMO_{q} (wobei p und q positive Zahlen sind und M P, Si, Ge, B, Al, Ga oder In ist), Li₇₋ₓPS₆₋ₓClₓ (wobei 0≤x≤2), Li₇₋ₓPS₆₋ₓBrₓ (wobei 0≤x≤2) und Li₇₋ₓPS₆₋ₓIₓ (wobei 0≤x≤2) umfasst,
der Festelektrolyt auf Sulfidbasis einen Festelektrolyten vom Argyrodit-Typ umfasst, der wenigstens einen ausgewählt aus Li₆PS₅Cl, Li₆PS₅Br und Li₆PS₅I umfasst,
wobei der Festelektrolyt vom Argyrodit-Typ eine Dichte von etwa 1,5 g/cc bis etwa 2,0 g/cc aufweist, und
eine Menge des Festelektrolyten auf Sulfidbasis von etwa 1 Gew.-% bis etwa 40 Gew.-% bezogen auf ein Gesamtgewicht der Positiv-Aktivmaterialschicht (12) beträgt; und/oder wobei die Positiv-Aktivmaterialschicht (12) ferner ein leitfähiges Material (200) umfasst und das leitfähige Material (200) ein kohlenstoffhaltiges leitfähiges Material umfasst, und
wobei eine Menge des kohlenstoffhaltigen leitfähigen Materials von etwa 1 Gew.-% bis etwa 40 Gew.-% bezogen auf ein Gesamtgewicht der Positiv-Aktivmaterialschicht (12) beträgt.

11. Feststoff-Sekundärbatterie (1) nach Ansprüchen 1 bis 10, wobei der Li₂S-haltige Verbundstoff einen Verbundstoff aus Li₂S und Kohlenstoff, einen Verbundstoff aus Li₂S, Kohlenstoff und einem Festelektrolyten (300), einen Verbundstoff aus Li₂S und einem Festelektrolyten (300), einen Verbundstoff aus Li₂S und einem Metallcarbid, einen Verbundstoff aus Li₂S, Kohlenstoff und einem Metallcarbid, einen Verbundstoff aus Li₂S und einem Metallnitrid, einen Verbundstoff aus Li₂S, Kohlenstoff und einem Metallnitrid oder eine Kombination davon umfasst,
wobei die Positiv-Aktivmaterialschicht (12) ferner FeS₂, VS₂, NaS, MnS, FeS, NiS, CuS oder eine Kombination davon umfasst, und
eine Menge des lithiumhaltigen Positiv-Aktivmaterials auf Sulfidbasis (100) von etwa 5 Gew.-% bis etwa 95 Gew.-% bezogen auf ein Gesamtgewicht der Positiv-Aktivmaterialschicht (12) beträgt.

12. Feststoff-Sekundärbatterie (1) nach Ansprüchen 1 bis 11, ferner umfassend ein erstes inaktives Element (40) an einer Seitenfläche der Positivelektrodenschicht (10),
wobei das erste inaktive Element (40) auf der Festelektrolytschicht (30) und Seitenflächen der Positivelektrodenschicht (10) angeordnet ist, und
die Negativelektrodenschicht (20) einen negativen Stromabnehmer (21) und eine Negativ-Elektrodenmaterialschicht auf einer ersten Oberfläche des negativen Stromabnehmers (21) umfasst, und
die Negativelektroden-Aktivmaterialschicht (22) nicht auf einer zweiten Oberfläche des negativen Stromabnehmers (21) angeordnet ist; und
wobei gegebenenfalls die Positivelektrodenschicht (10) einen positiven Stromabnehmer (11), eine erste Positiv-Aktivmaterialschicht (12) und eine zweite Positiv-Aktivmaterialschicht (12) umfasst, und
wobei die erste Positiv-Aktivmaterialschicht (12) und die zweite Positiv-Aktivmaterialschicht (12) jeweils auf einer ersten Oberfläche und einer zweiten Oberfläche des positiven Stromabnehmers (11) angeordnet sind,
die Festelektrolytschicht (30) eine erste Festelektrolytschicht (30a) und eine zweite Festelektrolytschicht (30b) entsprechend in Kontakt mit der ersten Positiv-Aktivmaterialschicht (12) bzw. der zweiten Positiv-Aktivmaterialschicht (12) umfasst,
die Negativelektrodenschicht (20) eine erste Negativelektrodenschicht (20) und eine zweite Negativelektrodenschicht (20) entsprechend in Kontakt mit der ersten Festelektrolytschicht (30a) bzw.der zweiten Festelektrolytschicht (30b) umfasst, und
das erste inaktive Element (40) an Seitenflächen der Positivelektrodenschicht (10) zwischen der ersten Festelektrolytschicht (30a) und der zweiten Festelektrolytschicht (30b), die einander zugewandt sind, angeordnet ist; und/oder
wobei gegebenenfalls das erste inaktive Element (40) ein flammhemmendes inaktives Element umfasst,
wobei das flammhemmende inaktive Element eine Matrix und einen Füllstoff umfasst,
wobei die Matrix ein Substrat und eine Verstärkung umfasst,
wobei das Substrat ein erstes Fasermaterial umfasst, wobei das erste Fasermaterial ein Isolationsmaterial ist und wenigstens eines ausgewählt aus Zellstofffasern, isolierenden Polymerfasern und ionenleitfähigen Polymerfasern umfasst,
die Verstärkung ein zweites Fasermaterial umfasst, wobei das zweite Fasermaterial ein flammhemmendes inaktives Material ist und wenigstens eines ausgewählt aus Glasfasern und Keramikfasern umfasst, und
der Füllstoff ein Feuchtigkeitsabsorber ist und ein Metallhydroxid umfasst, und
wobei das Metallhydroxid wenigstens eines ausgewählt aus Mg(OH)₂, Fe(OH)₃, Sb(OH)₃, Sn(OH)₄, Tl(OH)₃, Zr(OH)₄ und Al(OH)₃ umfasst.

13. Feststoff-Sekundärbatterie (1) nach Ansprüchen 1 bis 12, wobei die Negativelektrodenschicht (20) einen negativen Stromabnehmer (21) und eine erste Negativ-Aktivmaterialschicht (22) auf einer ersten Oberfläche des negativen Stromabnehmers (21) umfasst,
wobei die erste Negativ-Aktivmaterialschicht (22) wenigstens eines ausgewählt aus einem kohlenstoffhaltigen Negativ-Aktivmaterial und einem Negativ-Aktivmaterial auf Metallbasis umfasst, wobei das Negativ-Aktivmaterial auf Metallbasis fähig ist, eine Legierung oder Verbindung mit Lithium zu bilden,
wobei das kohlenstoffhaltige Negativ-Aktivmaterial amorphen Kohlenstoff umfasst,
wobei das Negativ-Aktivmaterial auf Metallbasis wenigstens ein legierungsbildendes Element ausgewählt aus Gold (Au), Platin (Pt), Palladium (Pd), Silicium (Si), Silber (Ag), Aluminium (Al), Bismut (Bi), Zinn (Sn), Zink (Zn) und Kombinationen davon umfasst,
wobei das Negativ-Aktivmaterial auf Metallbasis Partikel umfasst und ein Partikeldurchmesser der Partikel etwa 10 Nanometer (nm) bis etwa 4 Mikrometer (µm) beträgt, und
wobei die erste Negativ-Aktivmaterialschicht (22) ferner ein Bindemittel umfasst; und wobei die Feststoff-Sekundärbatterie (1) gegebenenfalls ferner ein zweites inaktives Element (50, 50a, 50b, 50c) auf einer zweiten Oberfläche des negativen Stromabnehmers (21) umfasst,
wobei das zweite inaktive Element (50, 50a, 50b, 50c) ein leitfähiges flammhemmendes inaktives Element umfasst, und
ein Young-Modul des zweiten inaktiven Elements (50, 50a, 50b, 50c) kleiner als ein Young-Modul des negativen Stromabnehmers (21) ist,
der Young-Modul des zweiten inaktiven Elements (50, 50a, 50b, 50c) 100 MPa oder weniger beträgt,
eine Dicke des zweiten inaktiven Elements (50, 50a, 50b, 50c) größer als eine Dicke der ersten Negativ-Aktivmaterialschicht (22) ist, und
die Dicke der ersten Negativ-Aktivmaterialschicht (22) 50 % oder weniger als die Dicke des zweiten inaktiven Elements (50, 50a, 50b, 50c) beträgt.

14. Feststoff-Sekundärbatterie (1) nach Ansprüchen 1 bis 13, wobei die Festelektrolytschicht (30) einen Elektrolyten umfasst,
wobei der Elektrolyt einen Festelektrolyten (300), einen Gelelektrolyten oder eine Kombination davon umfasst,
wobei der Festelektrolyt (300) einen Festelektrolyten auf Sulfidbasis, einen Festelektrolyten auf Oxidbasis, einen Polymerfestelektrolyten oder eine Kombination davon umfasst,
wobei der Gelelektrolyt einen Polymergelelektrolyten umfasst, und
wobei die Festelektrolytschicht (30) für Lithiumpolysulfid undurchlässig ist.

15. Feststoff-Sekundärbatterie (1) nach Ansprüchen 1 bis 14, wobei wenigstens einer von dem positiven Stromabnehmer (11) oder einem negativen Stromabnehmer (21) einen Grundfilm und eine Metallschicht auf wenigstens einer Oberfläche des Grundfilms umfasst,
wobei der Grundfilm ein Polymer umfasst, wobei das Polymer Polyethylenterephthalat (PET), Polyethylen (PE), Polypropylen (PP), Polybutylenterephthalat (PBT), Polyimid (PI) oder eine Kombination davon umfasst, und
wobei die Metallschicht Indium (In), Kupfer (Cu), Magnesium (Mg), Edelstahl, Titan (Ti), Eisen (Fe), Kobalt (Co), Nickel (Ni), Zink (Zn), Aluminium (Al), Germanium (Ge), Lithium (Li) oder eine Legierung davon umfasst.

## Revendications

1. Batterie secondaire entièrement solide (1) comprenant :
une couche d'électrode positive (10) comprenant un collecteur de courant positif (11) et une couche de matériau actif positif (12) sur au moins une surface supérieure ou une surface inférieure du collecteur de courant positif (11) ;
une couche d'électrode négative (20) ; et
une couche d'électrolyte solide (30) entre la couche d'électrode positive (10) et la couche d'électrode négative (20),
dans laquelle la couche de matériau actif positif (12) comprend un matériau actif positif à base de sulfure contenant du lithium (100) et un électrolyte composite (400),
dans laquelle le matériau actif positif à base de sulfure contenant du lithium (100) comprend du Li₂S, un composite contenant du Li₂S, ou une combinaison quelconque de ceux-ci, et
l'électrolyte composite (400) comprend un polymère (410), un sel de lithium et un liquide ionique (420), et
dans laquelle le liquide ionique (420) présente une solubilité saturée de polysulfure de lithium de 5 % en poids ou moins à 25 °C comme mesurée conformément à la description.

2. Batterie secondaire entièrement solide (1) selon la revendication 1, dans laquelle l'électrolyte composite (400) comprend en outre du polysulfure de lithium, et
une quantité de polysulfure de lithium est de 5 % en poids ou moins par rapport à un poids total de l'électrolyte composite (400).

3. Batterie secondaire entièrement solide (1) selon la revendication 1 ou 2, dans laquelle le liquide ionique (420) est représenté par la formule 1 ou 2 : 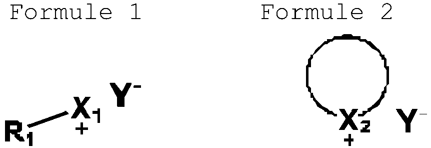 dans laquelle dans la formule 1,
X₁ est -N(R₂)(R₃)(R₄) ou -P(R₂)(R₃)(R₄), et
R₁, R₂, R₃, et R₄ sont chacun indépendamment un groupe alkyle en C1-C30 non substitué ou substitué par halogène, un groupe alcoxy en C1-C30 non substitué ou substitué par halogène, un groupe aryle en C6-C30 non substitué ou substitué par halogène, un groupe aryloxy en C6-C30 non substitué ou substitué par halogène, un groupe hétéroaryle en C3-C30 non substitué ou substitué par halogène, un groupe hétéroaryloxy en C3-C30 non substitué ou substitué par halogène, un groupe cycloalkyle en C4-C30 non substitué ou substitué par halogène, un groupe hétérocycloalkyle en C3-C30 non substitué ou substitué par halogène, ou un groupe oxyde d'alkylène en C2-C100 non substitué ou substitué par halogène.
dans la formule 2, 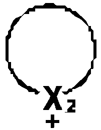 est un cycle hétérocycloalkyle ou un cycle hétéroaryle comprenant 1 à 3 hétéroatomes et 2 à 30 atomes de carbone, et le cycle est non substitué ou substitué par un substituant, et
X₂ est -N(R₅) (R₆), -N(R₅)=, -P(R₅)(R₆), ou -P(R₅)=,
le substituant du cycle, R₅, et R₆ sont chacun indépendamment hydrogène, un groupe alkyle en C1-C30 non substitué ou substitué par halogène, un groupe alcoxy en C1-C30 non substitué ou substitué par halogène, un groupe aryle en C6-C30 non substitué ou substitué par halogène, un groupe aryloxy en C6-C30 non substitué ou substitué par halogène, un groupe hétéroaryle en C3-C30 non substitué ou substitué par halogène, un groupe hétéroaryloxy en C3-C30 non substitué ou substitué par halogène, un groupe cycloalkyle en C4-C30 non substitué ou substitué par halogène, un groupe hétérocycloalkyle en C3-C30 non substitué ou substitué par halogène ou un groupe oxyde d'alkylène en C2-C100 non substitué ou substitué par halogène, et
Y⁻ est un anion.

4. Batterie secondaire entièrement solide (1) selon les revendications 1 à 3, dans laquelle le liquide ionique (420) est représenté par la formule 3 ou 4 : 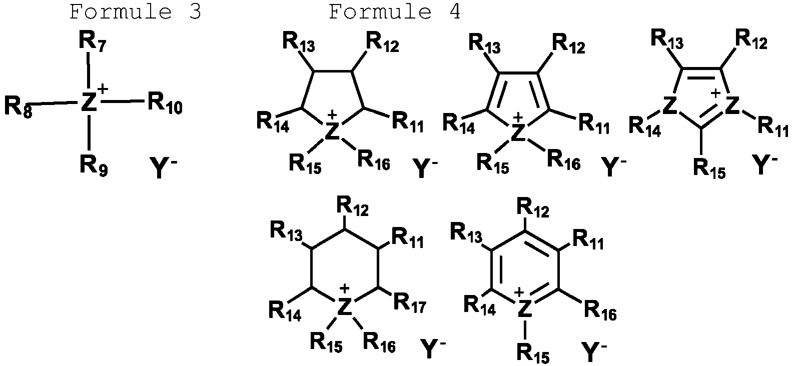 dans laquelle dans la formule 3,
Z est N ou P, et
R₇, R₈, R₉ et R₁₀ sont chacun indépendamment un groupe alkyle en C1-C30 non substitué ou substitué par halogène, un groupe aryle en C6-C30 non substitué ou substitué par halogène, un groupe hétéroaryle en C3-C30 non substitué ou substitué par halogène, un groupe cycloalkyle en C4-C30 non substitué ou substitué par halogène, ou un groupe hétérocycloalkyle en C3-C30 non substitué ou substitué par halogène, et
dans laquelle dans la formule 4,
Z est N ou P,
R₁₁, R₁₂, R₁₃, R₁₄, R₁₅, R₁₆ et R₁₇ sont chacun indépendamment hydrogène, un groupe alkyle en C1-C30 non substitué ou substitué par halogène, un groupe aryle en C6-C30 non substitué ou substitué par halogène, un groupe hétéroaryle en C3-C30 non substitué ou substitué par halogène, un groupe cycloalkyle en C4-C30 non substitué ou substitué par halogène, ou un groupe hétérocycloalkyle en C3-C30 non substitué ou substitué par halogène, et
Y⁻ est un anion.

5. Batterie secondaire entièrement solide (1) selon les revendications 1 à 4, dans laquelle l'anion comprend BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, PF₆⁻, ClO₄⁻, bis(oxalate)borate (BOB⁻), CF₃SO₃⁻, CF₃CO₂⁻, (FSO₂)₂N⁻, (C₂F₅SO₂)₂N⁻, (C₂F₅SO₂)(CF₃SO₂)N⁻, (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻ , (CF₃SO₂)₂CH⁻, (SF₅)₃C⁻, C₂N₃⁻, (O(CF₃)₂C₂(CF₃)₂O)₂PO⁻, (FSO₂)₂N⁻, (CF₃SO₂)₂N⁻, ou toute combinaison de ceux-ci.

6. Batterie secondaire entièrement solide (1) selon les revendications 1 à 5, dans laquelle le liquide ionique (420) comprend du bis (fluorosulfonyl)imide de 1-méthyl-1-propylpyrrolidinium, du bis(fluorosulfonyl)imide de 1-méthyl-1-butylpyrrolidinium, du bis(trifluorométhanesulfonyl)imide de 1-méthyl-1-propylpyrrolidinium, du bis(trifluorométhanesulfonyl)imide de 1-méthyl-1-butylpyrrolidinium, ou toute combinaison de ceux-ci, et le liquide ionique (420) présente une constante diélectrique de 15 ou moins ; et/ou
dans laquelle une quantité du liquide ionique (420) est au plus d'environ 10 % en poids par rapport au poids total de la couche de matériau actif positif (12) ou d'environ 1 % en poids à environ 40 % en poids par rapport au poids total de l'électrolyte composite (400).

7. Batterie secondaire entièrement solide (1) selon les revendications 1 à 6, dans laquelle le polymère (410) comprend un polyacrylonitrile (PAN), un poly(méthacrylate de méthyle) (PMMA), un polyimide (PI), un polytétrafluoroéthylène (PTFE), un poly(fluorure de vinylidène) (PVDF), un poly(fluorure de vinylidène)-hexafluoropropylène (PVDF-HFP), un caoutchouc styrène-butadiène (SBR), une polyvinylpyrrolidone (PVP), un poly(oxyde d'éthylène) (PEO), un copolymère tétrafluoroéthylène-perfluoroalkylvinyléther, un copolymère fluorure de vinylidène-chlorotrifluoroéthylène, un copolymère éthylène-tétrafluoroéthylène, un polychlorotrifluoroéthylène, un copolymère fluorure de vinylidène-pentafluoropropylène, un copolymère propylène-tétrafluoroéthylène, un copolymère éthylène-chlorotrifluoroéthylène, un copolymère fluorure de vinylidène-hexafluoropropylène-tétrafluoroéthylène, un copolymère fluorure de vinylidène-perfluorométhylvinyléther-tétrafluoroéthylène, un copolymère éthylène-acide acrylique, ou toute combinaison de ceux-ci.

8. Batterie secondaire entièrement solide (1) selon les revendications 1 à 7, dans laquelle le sel de lithium comprend au moins l'un choisi parmi LiPF₆, LiBF₄, LiCF₃SO₃, LiC₂F₅SO₃, LiC₄F₉SO₃, LiN(SO₂F)₂ (LiFSI), LiN(CF₃SO₂)₂ (LiTFSI), LiN(SO₂CF₂CF₃)₂, LiSCN, LiN(CN)₂, Li(CF₃SO₂)₃C, LiCl, LiF, LiBr, LiI, LiB (C₂O₄)₂, LiBF₄, LiBF₃(C₂F₅), LiAsF₆, LiSbF₆, LiClO₄, et des composés représentés par les formules 11 à 14 :

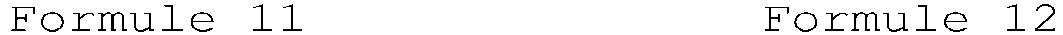

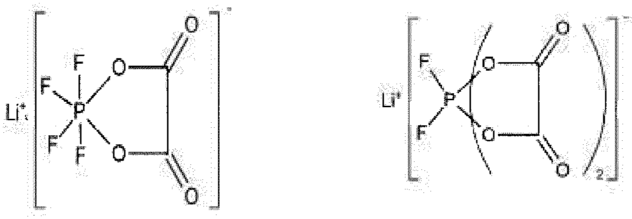

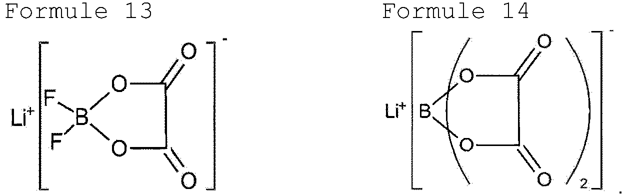

9. Batterie secondaire entièrement solide (1) selon les revendications 1 à 8, dans laquelle une quantité de l'électrolyte composite (400) est de 10 % en poids ou moins par rapport au poids total de la couche de matériau actif positif (12),
une quantité d'une combinaison du polymère (410) et du sel de lithium est de 9 % en poids ou moins par rapport au poids total de la couche de matériau actif positif (12), et
le rapport molaire du polymère (410) sur le sel de lithium est de 2:1 à 30:1.

10. Batterie secondaire entièrement solide (1) selon les revendications 1 à 9, dans laquelle la couche de matériau actif positif (12) comprend en outre un électrolyte solide (300), l'électrolyte solide (300) comprenant un électrolyte solide à base de sulfure,
dans laquelle l'électrolyte solide à base de sulfure comprend au moins l'un choisi parmi Li₂S-P₂S₅, Li₂S-P₂S₅-LiX (où X est un halogène), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (où m et n sont des nombres positifs et Z est Ge, Zn, ou Ga), Li₂S-GeS₂, Li₂S-SiS₂-Li₃PO₄, Li₂S-SiS₂-LiₚMO_{q} (où p et q sont des nombres positifs et M est P,
Si, Ge, B, Al, Ga, ou In), Li₇₋ₓPS₆₋ₓClₓ (où 0 ≤ x ≤ 2), Li₇₋ₓPS₆₋ₓBrₓ (où 0 ≤ x ≤ 2), et Li₇₋ₓPS₆₋ₓIₓ (où 0 ≤ x ≤ 2), l'électrolyte solide à base de sulfure comprend un électrolyte solide de type argyrodite comprenant au moins l'un choisi parmi Li₆PS₅Cl, Li₆PS₅Br et Li₆PS₅I,
dans laquelle l'électrolyte solide de type argyrodite a une densité d'environ 1,5 g/cm³ à environ 2,0 g/cm³, et une quantité de l'électrolyte solide à base de sulfure est d'environ 1 % en poids à environ 40 % en poids par rapport au poids total de la couche de matériau actif positif (12) ; et/ou
dans laquelle la couche de matériau actif positif (12) comprend en outre un matériau conducteur (200), et le matériau conducteur (200) comprend un matériau conducteur carboné, et
dans laquelle une quantité du matériau conducteur carboné est d'environ 1 % en poids à environ 40 % en poids par rapport au poids total de la couche de matériau actif positif (12).

11. Batterie secondaire entièrement solide (1) selon les revendications 1 à 10, dans laquelle le composite contenant du Li₂S comprend un composite de Li₂S et de carbone, un composite de Li₂S, de carbone, et d'un électrolyte solide (300), un composite de Li₂S et d'un électrolyte solide (300), un composite de Li₂S et d'un carbure métallique, un composite de Li₂S, de carbone et d'un carbure métallique, un composite de Li₂S et d'un nitrure métallique, un composite de Li₂S, de carbone et d'un nitrure métallique, ou une combinaison de ceux-ci,
la couche de matériau actif positif (12) comprend en outre FeS₂, VS₂, NaS, MnS, FeS, NiS, CuS, ou une combinaison de ceux-ci, et
une quantité du matériau actif positif à base de sulfure contenant du lithium (100) est d'environ 5 % en poids à environ 95 % en poids par rapport au poids total de la couche de matériau actif positif (12).

12. Batterie secondaire entièrement solide (1) selon les revendications 1 à 11, comprenant en outre un premier membre inactif (40) sur une surface latérale de la couche d'électrode positive (10),
dans laquelle le premier membre inactif (40) se trouve sur la couche d'électrolyte solide (30) et les surfaces latérales de la couche d'électrode positive (10), et
la couche d'électrode négative (20) comprend un collecteur de courant négatif (21) et une couche de matériau d'électrode négative sur une première surface du collecteur de courant négatif (21), et
la couche de matériau actif d'électrode négative (22) ne se trouve pas sur une seconde surface du collecteur de courant négatif (21) ; et
dans laquelle la couche d'électrode positive (10) comprend éventuellement un collecteur de courant positif (11), une première couche de matériau actif positif (12) et une seconde couche de matériau actif positif (12), et dans laquelle la première couche de matériau actif positif (12) et la seconde couche de matériau actif positif (12) se trouvent respectivement sur une première surface et une seconde surface du collecteur de courant positif (11),
la couche d'électrolyte solide (30) comprend une première couche d'électrolyte solide (30a) et une seconde couche d'électrolyte solide (30b) respectivement en contact avec la première couche de matériau actif positif (12) et la seconde couche de matériau actif positif (12),
la couche d'électrode négative (20) comprend une première couche d'électrode négative (20) et une seconde couche d'électrode négative (20) respectivement en contact avec la première couche d'électrolyte solide (30a) et la seconde couche d'électrolyte solide (30b), et
le premier membre inactif (40) se trouve sur des surfaces latérales de la couche d'électrode positive (10) entre la première couche d'électrolyte solide (30a) et la seconde couche d'électrolyte solide (30b) se faisant face ; et/ou
dans laquelle le premier membre inactif (40) comprend éventuellement un membre inactif ignifuge,
dans laquelle le membre inactif ignifuge comprend une matrice et une charge,
dans laquelle la matrice comprend un substrat et un renfort,
dans laquelle le substrat comprend un premier matériau fibreux, le premier matériau fibreux étant un matériau isolant et comprenant au moins un matériau choisi parmi les fibres de pâte, les fibres de polymères isolantes et les fibres de polymère conductrices d'ions,
le renfort comprend un second matériau fibreux, le second matériau fibreux étant un matériau inactif ignifuge et comprenant au moins un matériau choisi parmi les fibres de verre et les fibres de céramique, et
la charge est un getter d'humidité et comprend un hydroxyde métallique, et
dans laquelle l'hydroxyde métallique comprend au moins l'un choisi parmi Mg(OH)₂, Fe(OH)₃, Sb(OH)₃, Sn(OH)₄, Tl(OH)₃, Zr(OH)₄, et Al(OH)₃.

13. Batterie secondaire entièrement solide (1) selon les revendications 1 à 12, dans laquelle la couche d'électrode négative (20) comprend un collecteur de courant négatif (21) et une première couche de matériau actif négatif (22) sur une première surface du collecteur de courant négatif (21),
dans laquelle la première couche de matériau actif négatif (22) comprend au moins un matériau choisi parmi un matériau actif négatif carboné et un matériau actif négatif à base de métal, le matériau actif négatif à base de métal est capable de former un alliage ou un composé avec le lithium,
dans laquelle le matériau actif négatif carboné comprend du carbone amorphe,
dans laquelle le matériau actif négatif à base de métal comprend au moins un élément formant un alliage choisi parmi l'or (Au), le platine (Pt), le palladium (Pd), le silicium (Si), l'argent (Ag), l'aluminium (Al), le bismuth (Bi), l'étain (Sn), le zinc (Zn) et des combinaisons de ceux-ci,
dans laquelle le matériau actif négatif à base de métal comprend des particules, et un diamètre de particule des particules est d'environ 10 nanomètres (nm) à environ 4 micromètres (µm), et
dans laquelle la première couche de matériau actif négatif (22) comprend en outre un liant ; et dans laquelle la batterie secondaire entièrement solide (1) comprend en outre éventuellement un second membre inactif (50, 50a, 50b, 50c) sur une seconde surface du collecteur de courant négatif (21),
dans laquelle le second membre inactif (50, 50a, 50b, 50c) comprend un membre inactif ignifuge conducteur, et un module de Young du second membre inactif (50, 50a, 50b, 50c) est inférieur à un module de Young du collecteur de courant négatif (21),
le module de Young du second membre inactif (50, 50a, 50b, 50c) est 100 MPa ou moins,
une épaisseur du second membre inactif (50, 50a, 50b, 50c) est supérieure à une épaisseur de la première couche de matériau actif négatif (22), et
l'épaisseur de la première couche de matériau actif négatif (22) est 50 % ou moins de l'épaisseur du second membre inactif (50, 50a, 50b, 50c).

14. Batterie secondaire entièrement solide (1) selon les revendications 1 à 13, dans laquelle la couche d'électrolyte solide (30) comprend un électrolyte,
dans laquelle l'électrolyte comprend un électrolyte solide (300), un électrolyte en gel ou une combinaison de ceux-ci,
dans laquelle l'électrolyte solide (300) comprend un électrolyte solide à base de sulfure, un électrolyte solide à base d'oxyde, un électrolyte solide de polymère ou une combinaison de ceux-ci,
dans laquelle l'électrolyte en gel comprend un électrolyte en gel de polymère, et
dans laquelle la couche d'électrolyte solide (30) est imperméable au polysulfure de lithium.

15. Batterie secondaire entièrement solide (1) selon les revendications 1 à 14, dans laquelle au moins l'un parmi le collecteur de courant positif (11) ou un collecteur de courant négatif (21) comprend un film de base et une couche métallique sur au moins une surface du film de base,
dans laquelle le film de base comprend un polymère, le polymère comprenant un poly(téréphtalate d'éthylène) (PET), un polyéthylène (PE), un polypropylène (PP), un poly(téréphtalate de butylène) (PBT), un polyimide (PI), ou une combinaison de ceux-ci, et
dans laquelle la couche métallique comprend de l'indium (In), du cuivre (Cu), du magnésium (Mg), de l'acier inoxydable, du titane (Ti), du fer (Fe), du cobalt (Co), du nickel (Ni), du zinc (Zn), de l'aluminium (Al), du germanium (Ge), du lithium (Li) ou un alliage de ceux-ci.
